# EUROPEAN PATENT SPECIFICATION

(11) **EP 4 348 962 B1**
(45) Date of publication and mention of the grant of the patent: **04.11.2026**
(21) Application number: 21786142.6
(22) Date of filing: 28.09.2021
(51) Int. Cl.: H04L 41/14, H04L 41/147, H04L 41/0894, H04L 41/149, H04L 41/40, H04L 41/16, H04L 43/08, H04L 41/0806, H04L 41/082, H04L 41/5054, H04L 41/046, H04L 41/0895

(54) **TRAINING A POLICY FOR MANAGING A COMMUNICATION NETWORK ENVIRONMENT**
TRAINIEREN EINER RICHTLINIE ZUR VERWALTUNG EINER KOMMUNIKATIONSNETZWERKUMGEBUNG
ENTRAÎNEMENT D'UNE POLITIQUE DE GESTION D'UN ENVIRONNEMENT DE RÉSEAU DE COMMUNICATION

(30) Priority: 04.06.2021 IN 202141024878
(43) Date of publication of application: 10.04.2024
(73) Proprietor: Telefonaktiebolaget LM Ericsson (publ), 164 83 Stockholm (SE)
(72) Inventor: KATTEPUR, Ajay, Bangalore 560094 (IN); DEY, Kaushik, Kolkata, 700157 (IN); MOHALIK, Swarup Kumar, Bangalore 560037 Karnataka (IN)
(74) Representative: Ericsson
(86) International application number: PCT/EP2021/076661
(87) International publication number: WO 2022/253453

(56) References cited:
- US-A1- 2010 094 786
- US-A1- 2014 279 737
- US-A1- 2020 320 435
- MALMIR MOHSEN ET AL: "Belief tree search for active object recognition", 2017 IEEE/RSJ INTERNATIONAL CONFERENCE ON INTELLIGENT ROBOTS AND SYSTEMS (IROS), IEEE, 24 September 2017 (2017-09-24), pages 4276 - 4283, XP033266441, DOI: 10.1109/IROS.2017.8206290

## Description

### Technical Field

The present disclosure relates to a computer implemented method for training a policy for managing an environment in a communication network, wherein the environment is operable to perform a task. The method is performed by a training node, and the present disclosure also relates to a training node and to a computer program product configured, when run on a computer, to carry out a method for training a policy for managing an environment in a communication network.

### Background

Autonomous decision making and control of telecommunication systems and subsystems can use various Artificial Intelligence (Al) based techniques, of which Reinforcement Learning (RL) is one of the most prominent. RL is a technology according to which a decision-making model is trained by interacting with an environment, with the aim of optimizing some objective, formulated in terms of a reward function defined by a user. Using observations from the environment being controlled, an RL agent adapts and improves its policies (decision making capability) so as to maximise future reward. Stakeholders of such policies for communication network management may include network operators, network service providers, network users. etc. Stakeholders will often ask for explanations of actions taken as a result of an RL management policy, and the quality, accuracy, and usefulness of these explanations can significantly impact stakeholder acceptance and approval of management policies using RL, and Al in general.

An RL problem is usually modeled as a Markov Decision Process (MDP), which includes a state space *S*, an action space *A,* a transition function *T* and the reward function *R*. The RL decision-making agent (or policy model), receives as input an observation of the environment, and produces as output an action for execution in the environment. The agent is trained using past trajectories of tuples comprising observation, action, reward, and next observation. An MDP assumes that a managing agent has full knowledge of the current underlying state s of the environment being managed. An MDP is consequently a special case of a Partially Observable Markov Decision Processes (POMDP), in which this assumption of perfect state knowledge no longer holds.

In many application domains, including communication networks, full knowledge of environment states may not be possible, owing for example to noisy measurements giving faulty information, or leading to ambiguity in environment observations. A POMDP models uncertainty about the current state of the environment by introducing hidden states, i.e. states that are not directly observable by the agent. The only perception the agent has of the state of a controlled environment is through imperfect observations. The POMDP model is extended with respect to a standard MDP by introducing an observation space *Z* of what the agent can observe, and an observation function *O*, relating the observations to the hidden states through a probability distribution of the observations over the states. The POMDP also introduces the concept of a belief state, which is a probability distribution over the possible hidden states of the environment.

POMDP agents and probabilistic planning techniques consequently have multiple levels of uncertainty and complexity to be resolved in order to arrive at a working management policy. These uncertainties may encompass sensor observations, actions, agent state space, true environment state space and transition probabilities. As these uncertainties are typically weaved into the reward function, the only feedback mechanism for improving belief states is via observations of the environment during policy evaluation. Uncertainties in observations also propagate through to action explanations provided to stakeholders, potentially undermining confidence in the RL system and reducing its usefulness.

US2020/320435 discloses techniques for applying a multi-level introspection framework to interaction data characterizing a history of interaction of a reinforcement learning agent with an environment. The framework may apply statistical analysis and machine learning methods to interaction data collected during the RL agent's interaction with the environment. The framework may include a first ("environment") level that analyzes characteristics of one or more tasks to be solved by the RL agent to generate elements, a second ("interaction") level that analyzes actions of the RL agent when interacting with the environment to generate elements, and a third ("meta-analysis") level that generates elements by analyzing combinations of elements generated by the first level and elements generated by the second level.

### Summary

It is an aim of the present disclosure to provide a method, a training node, and a computer program product which at least partially address one or more of the challenges discussed above. It is a further aim of the present disclosure to provide a method, a training node and a computer program product that cooperate to achieve at least one of improved belief inferencing in POMDP models using explanation feedback received during training or policy execution, and/or improved explanations of POMDP model actions using through validation of belief states using explanation feedback.

The present invention is defined in the appended independent claims to which reference should be made. Advantageous features are set out in the appended dependent claims.

According to a first aspect of the present disclosure, there is provided a computer implemented method for training a policy for managing an environment in a communication network, wherein the environment is operable to perform a task. The method is performed by a training node and comprises using a first policy function to select an action for execution in the environment, wherein the selected action is predicted to maximise a future value of a reward function for task performance, given a current belief state of the environment, wherein the current belief state of the environment comprises a probability distribution over possible operational states in which the environment may exist. The method further comprises recording an explanation tree for the selected action, wherein the explanation tree comprises a representation of the current belief state of the environment, available actions that could be executed in the environment, and predicted reward function values associated with the available actions. The method further comprises causing the selected action to be executed in the environment and obtaining an observation of the environment following execution of the selected action, the observation comprising a measure of task performance by the environment. The method further comprises using a second policy function to generate an updated current belief state of the environment based on the obtained observation, and on a probability that an explanation for the selected action would be accepted by an entity querying the selected action, the probability being determined based on feedback received from the entity, the explanation being generated using the explanation tree for the selected action.

According to another aspect of the present disclosure, there is provided a computer program product comprising a computer readable medium, the computer readable medium having computer readable code embodied therein, the computer readable code being configured such that, on execution by a suitable computer or processor, the computer or processor is caused to perform a method according to any one or more of the aspects or examples of the present disclosure.

According to another aspect of the present disclosure, there is provided a training node for training a policy for managing an environment in a communication network, wherein the environment is operable to perform a task. The training node comprises processing circuitry that is configured to cause the training node to use a first policy function to select an action for execution in the environment, wherein the selected action is predicted to maximise a future value of a reward function for task performance, given a current belief state of the environment. The current belief state of the environment comprises a probability distribution over possible operational states in which the environment may exist. The processing circuitry is further configured to cause the training node to record an explanation tree for the selected action, wherein the explanation tree comprises a representation of the current belief state of the environment, available actions that could be executed in the environment, and predicted reward function values associated with the available actions. The processing circuitry is further configured to cause the training node to cause the selected action to be executed in the environment, and to obtain an observation of the environment following execution of the selected action, the observation comprising a measure of task performance by the environment. The processing circuitry is further configured to cause the training node to using a second policy function to generate an updated current belief state of the environment based on the obtained observation, and on a probability that an explanation for the selected action would be accepted by an entity querying the selected action, the probability being determined based on feedback received from the entity, the explanation being generated using the explanation tree for the selected action.

According to another aspect of the present disclosure, there is provided a training node for training a policy for managing an environment in a communication network, wherein the environment is operable to perform a task. The training node comprises a policy module for using a first policy function to select an action for execution in the environment, wherein the selected action is predicted to maximise a future value of a reward function for task performance, given a current belief state of the environment. The current belief state of the environment comprises a probability distribution over possible operational states in which the environment may exist. The training node also comprises an explanation module for recording an explanation tree for the selected action, wherein the explanation tree comprises a representation of the current belief state of the environment, available actions that could be executed in the environment, and predicted reward function values associated with the available actions. The policy module is also for causing the selected action to be executed in the environment. The training node also comprises a transceiver module for obtaining an observation of the environment following execution of the selected action, the observation comprising a measure of task performance by the environment. The policy module is also for using a second policy function to generate an updated current belief state of the environment based on the obtained observation, and on a probability that an explanation for the selected action would be accepted by an entity querying the selected action, the probability being determined based on feedback received from the entity, the explanation being generated by the explanation module using the explanation tree for the selected action.

Aspects of the present disclosure thus provide a method and nodes that facilitate robust environment management. Examples of the present disclosure incorporate feedback from a querying entity via explanation probabilities, so improving the accuracy of belief states for a management environment, and consequently improving the quality of action that are selected for execution in an environment, and overall environment task performance. The explanation feedback also assists with adapting a policy to changes in an environment.

### Brief Description of the Drawings

For a better understanding of the present disclosure, and to show more clearly how it may be carried into effect, reference will now be made, by way of example, to the following drawings in which:
Figure 1 illustrates examples of communication network architecture;
Figure 2 is a flow chart illustrating process steps in a computer implemented method for training a policy for managing an environment in a communication network;
Figures 3a to 3e show flow charts illustrating process steps in a further example of method for training a policy for managing an environment in a communication network;
Figure 4 is a block diagram illustrating functional modules in an example training node;
Figure 5 is a block diagram illustrating functional modules in another example example training node;
Figure 6 illustrates an example architecture for implementing methods according to the present disclosure;
Figure 7 illustrates progression of a POMDP though different environment states;
Figure 8 illustrates a decision tree;
Figure 9 illustrates process options following rejected explanation;
Figure 10 provides an overview of how explanations may be structured for POMDP models;
Figure 11 presents a view of a querying entity interacting with a POMDP training process;
Figure 12 illustrates a first use case;
Figure 13 illustrates a POMDP policy graph updated with input explanation feedback;
Figure 14 illustrates explanations being improved through validated belief states;
Figure 15 illustrates a second use case; and
Figures 16A and 16B illustrate an example message flow.

### Detailed Description

In management of communication network systems by RAL agents, the provision of explanations for executed actions has typically been decoupled from operation and training of the RL policy itself, which can lead to deteriorating performance. Erroneous belief states are stored and cascaded, reducing the reliability of RL models in real deployments, as well as stakeholder confidence in such models. Examples of the present disclosure propose to include the stakeholder (or a model of stakeholder behaviour) as part of the environment. An explanation tree conveying information about the current state of the RL agent or policy is introduced as an additional output of a decision making step, in addition to an action for execution in the environment. A function of a response of a stakeholder, modelled as a querying entity, to an action explanation based on this explanation tree is included as an additional environment observation. The function of a querying entity response comprises a probability that the action explanation would be accepted by the querying entity. This additional observation promotes updating of belief states to those that are consistent with "correct" explanations, as validated or accepted by the querying entity. The additions to standard POMDP model proposed in the present disclosure consequently enable faster learning convergence for the RL policy, as well as improved quality of explanations provided to a querying entity.

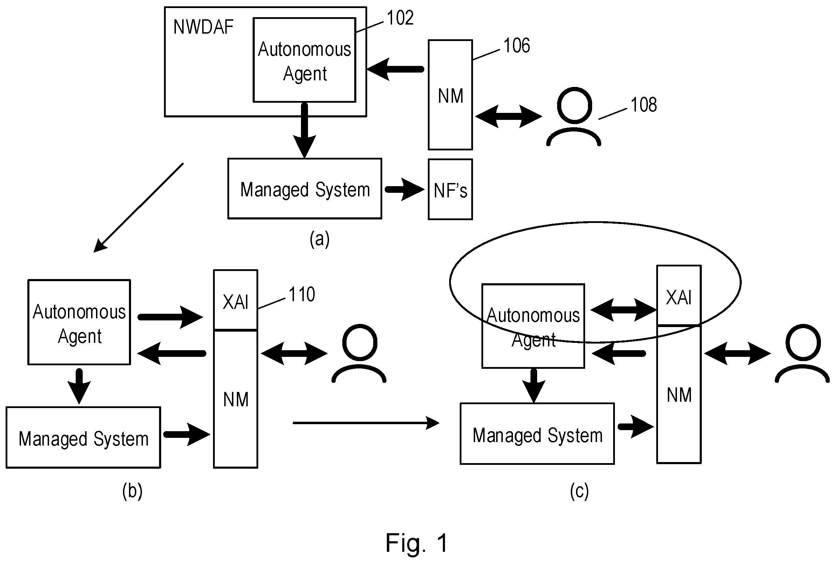

Figure 1 illustrates three examples of communication network architecture, illustrating how examples of the present disclosure may evolve an existing framework for autonomous control of a managed system to provide the above discussed improvements. As illustrated in part (a) of Figure 1, for a managed system in a communication network, an autonomous agent 102 is deployed that observes Key Performance Indicators (KPIs) of the managed system 104 and executes actions in the system as a consequence of the evolution in observed KPIs. Many examples of autonomous management of systems may be envisaged including a reinforcement learner for network router/switch configurations, QoE estimation, Radio Antenna cell shaping, 5G slice reconfiguration etc.

Actions executed in the system 104 are output by the autonomous agent to a network management function 106 and observed by one or more stakeholders 108. Network management function 106 can provide various analytics insights, and with machine reasoning algorithms, zero-touch decisions for actuation can also be incorporated. As discussed, a stakeholder may request explanations for actions executed in the system, and provision for this is illustrated in part (b) of Figure 1. Explanations for autonomous agent actions can be provided by an Explainable Al (XAI) module 110. Explainability refers to insights relating to actions that are queried by the stakeholder. Various tools are currently available to provide such insights, including for example Local Interpretable Model-Agnostic Explanations (LIME) and SHapley Additive exPlanations (SHAP). As illustrated in part (b) of Figure 1, this provision of explanations is a one-way process. Examples of the present disclosure propose to make this process two-way, as illustrated in part (c) of Figure 1. Examples of the present disclosure, in addition to providing explanations, use feedback from the stakeholder about the provided explanations in order to improve the autonomous agent's performance, so contributing to achieving a "zero-touch" communication network, which requires minimal human intervention for operation and management. The autonomous agent's performance may be improved both though improved agent policies (more accurate belief state updating) and through improved explanations provided to the stakeholder. Examples of the present disclosure thus introduce additional interaction between the stakeholder, XAI module and the autonomous agent executing a reinforcement learning policy.

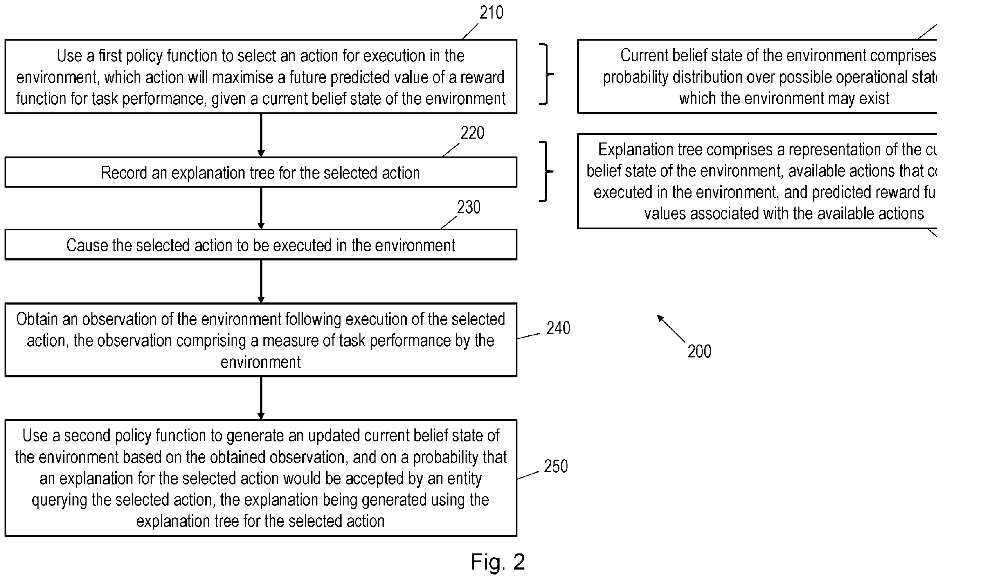

Figure 2 is a flow chart illustrating process steps in a computer implemented method 200 for training a policy for managing an environment in a communication network, wherein the environment is operable to perform a task. The environment may for example comprise a communication network cell, cell sector, network slice, networking node such as a router or switch, or any other part of a communication network. The environment may in some examples comprise a model of any such part of a communication network.

The task may for example comprise provision of communication network services, provision of transport network services, routing of network traffic, etc.

The method 200 is performed by a training node, which may comprise a physical or virtual node, and may be implemented in a computer system, computing device or server apparatus and/or in a virtualized environment, for example in a cloud, edge cloud or fog deployment. Examples of a virtual node may include a piece of software or computer program, a code fragment operable to implement a computer program, a virtualised function, or any other logical entity. The training node may for example be implemented in a core network of the communication network, and may be implemented in the Operation Support System (OSS). The training node may be implemented in an Orchestration And Management (OAM) system or in a Service Management and Orchestration (SMO) system. In other examples, the training node may be implemented in a Radio Access node, which itself may comprise a physical node and/or a virtualized network function that is operable to exchange wireless signals. In some examples, a Radio Access node may comprise a base station node such as a NodeB, eNodeB, gNodeB, or any future implementation of this functionality. The training node may be implemented as a function in an Open Radio Access Network (ORAN) or Virtualised Radio Access Network (vRAN). The controller node may encompass multiple logical entities, as discussed in greater detail below, and may for example comprise a Virtualised Network Function (VNF). In some examples, the training node may encompass a POMDP agent and an explainer agent.

Referring to Figure 2, the method 200 comprises, in a first step 210, using a first policy function to select an action for execution in the environment, which action will maximise a future predicted value of a reward function for task performance, given a current belief state of the environment. As illustrated at 210a, the current belief state of the environment comprises a probability distribution over possible operational states in which the environment may exist. An operational state may be characterised by any one or more of a wide range of parameters appropriate to the given environment, and may reflect configuration settings and/or operational performance of the environment. An operational state may thus be represented by a vector or matrix of parameter values for the environment. The reward function may be a function of one or more observations, belief states and actions.

In step 220, the method comprises recording an explanation tree for the selected action. As illustrated at 220a, the explanation tree comprises a representation of:
(i) the current belief state of the environment,
(ii) available actions that could be executed in the environment, and
(iii) predicted reward function values associated with the available actions.

The explanation tree consequently provides a representation of the factors on the basis of which the first policy function selected an action at step 210.

In step 230, the method 200 comprises causing the selected action to be executed in the environment, and in step 240, the method 200 comprises obtaining an observation of the environment following execution of the selected action, the observation comprising a measure of task performance by the environment. The observation may for example comprise one or more KPIs for the environment and/or measurements of environment task performance, operation, etc. In step 250, the method 200 comprises using a second policy function to generate an updated current belief state of the environment based on the obtained observation, and on a probability that an explanation for the selected action would be accepted by an entity querying the selected action, the explanation being generated using the explanation tree for the selected action.

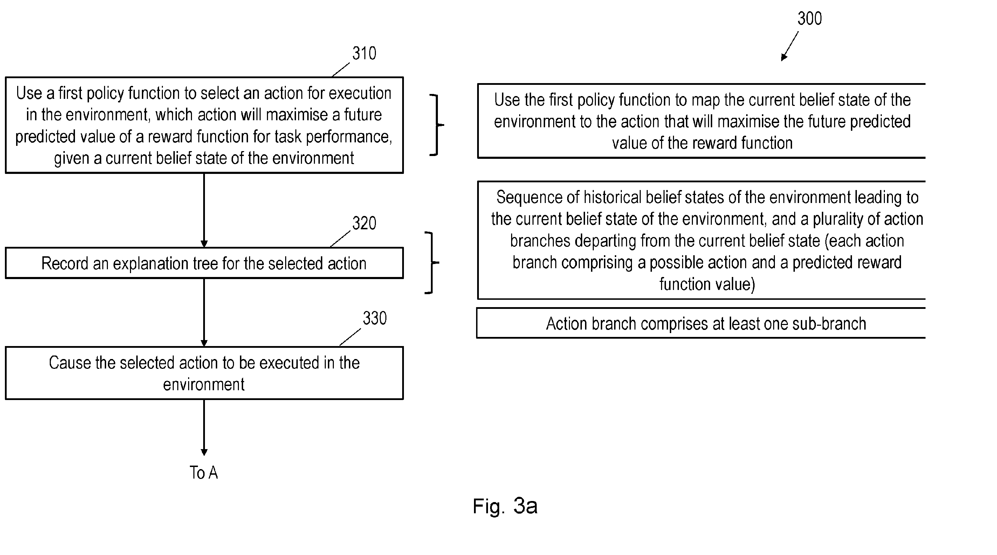

The method 200 introduces the concept of an explanation probability, that is a probability that an explanation for a selected action would be accepted by an entity querying the selected action, the explanation being generated using the explanation tree for the selected action. This explanation probability is used to update the belief state of the environment during training of a policy for managing the environment. The method 200 thus distinguishes between an explanation tree and an explanation. An explanation tree is recorded for each action selected by the policy. An explanation for an action is provided to an entity querying an action, and is generated using the explanation tree for that action. As discussed in greater detail below with reference to Figures 3a to 3e, an explanation may comprise a representation of information in the explanation tree, a mapping of elements of the explanation tree to operational requirements for the environment to be controlled by the policy, etc. An explanation acceptance probability is the probability that an explanation for an action, the explanation generated using the recorded explanation tree for that action, will be accepted by an entity querying the selected action, if such a query is received. Explanation probabilities are consequently available at each iteration of the method 200, whereas an explanation is generated in response to a query, which may only be received sporadically. Explanation feedback in the form of acceptance or rejection of an explanation may thus be relatively sparse, but this sparse feedback may be used to inform belief update at each method step, using the explanation probabilities.

In summary, the training node executing the method 200 uses a first policy function to select an action that is predicted to maximise a future value of a reward function. The training node also records an explanation tree for the selected action, on the basis of which an explanation for why the action was selected may be generated. The training node then uses a second policy function to update the belief state of the environment following execution of the action. The second policy function uses both an environment observation and explanation acceptance probabilities to update the belief state. The observation provides a clue directly from the environment as to what state the environment may be in, and the explanation acceptance probabilities represent input from a querying entity, which may be sparse and/or highly periodic, but which may assist with interpreting the observation to arrive at the correct belief state.

The method 200 offers increased accuracy of belief state updating, by including when updating the belief state of an environment the probability that an explanation for a selected action will be accepted by a querying entity. The querying entity could be any entity that is authorized and able to query an action executed in the environment. The querying entity may be physical or virtual, including for example a stakeholder of the environment such as a network operator, network service provided or network user, and/or a model of such a stakeholder. If an explanation for an action is accepted by a querying entity, this suggests that the action was acceptable under the circumstances in which it was selected, and consequently that the belief state on which the action selection was based was correct. Conversely, if an explanation is not accepted, then the selected action was inappropriate for the environment circumstances, suggesting that the belief state on which the action selection was based may be incorrect. The probability that an explanation will be accepted therefore provides an indication of the likelihood that the current belief state is correct, and incorporating this probability into the updating of the belief state can improve the accuracy of the belief state, and consequently improve the quality of actions selected by the policy.

Figures 3a to 3e show flow charts illustrating process steps in a further example of method 300 for training a policy for managing an environment in a communication network, wherein the environment is operable to perform a task. The method 300 provides various examples of how the steps of the method 100 may be implemented and supplemented to achieve the above discussed and additional functionality. As for the method 200, the method 300 is performed by a training node, which may be a physical or virtual node, and which may encompass multiple logical entities, as discussed in greater detail above with reference to Figure 2.

Referring to Figure 3a, in a first step 310 of the method 300, the training node uses a first policy function to select an action for execution in the environment, which action will maximise a future predicted value of a reward function for task performance, given a current belief state of the environment. As discussed above, the current belief state of the environment comprises a probability distribution over possible operational states in which the environment may exist. The first policy function may, as illustrated at 310a, map the current belief state of the environment to the action that will maximise the future predicted value of the reward function. The first policy function may for example predict reward function values for each possible action given the current belief state, and may map the current belief state to the action that is predicted to result in the highest reward function value. In other examples, the first policy function may be implemented as a Neural Network or other Machine Learning (ML) model, which maps an input belief state (probability distribution over possible operational states of the environment) directly to an action that maximizes future predicted reward.

In step 320, the training node records an explanation tree for the selected action, wherein the explanation tree comprises a representation of the current belief state of the environment, available actions that could be executed in the environment, and predicted reward function values associated with the available actions. As illustrated at 320a, the explanation tree for the selected action may comprise a representation of a sequence of historical belief states of the environment, the sequence leading to the current belief state of the environment, and a plurality of action branches departing from the current belief state of the environment. Each action branch may correspond to a possible action that could be executed in the environment in the current belief state, and may comprise a predicted reward function value associated with the possible action. In some examples, the sequence of belief states leading to the current belief state may comprise only those belief states that have been identified as "valid", after an explanation for an action taken from the belief state and queried by an entity has been accepted. Identification of valid belief states is discussed in greater detail below. As illustrated at 320b, an action branch of the explanation tree may comprise at least one sub-branch, the sub-branch corresponding to a subsequent possible action that could be executed in the environment and a predicted reward function value associated with the subsequent possible action. Multiple sub-branches, representing possible actions and predicted reward values for future time steps, may be present in the explanation tree. The explanation tree may be recorded by saving the explanation tree to a memory, sending the explanation tree to another logical entity for storage, or in any other suitable manner.

In step 330, the training node causes the selected action to be executed in the environment. This may comprise initiating execution of the action, either through direct communication with the relevant environment entity, or by sending an instruction to an environment system controller or other control function.

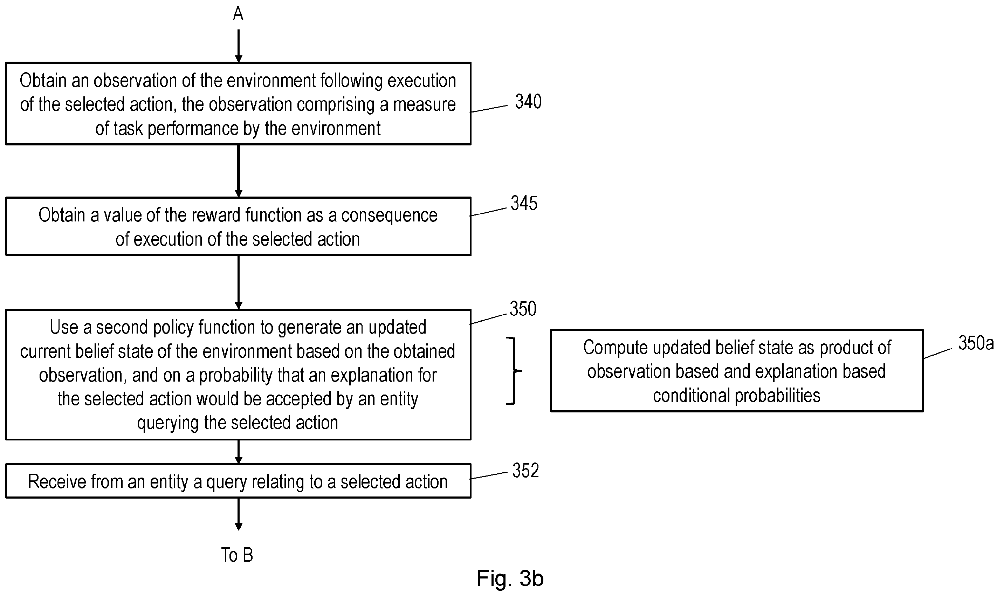

Referring now to Figure 3b, in step 340, the training node obtains an observation of the environment following execution of the selected action, the observation comprising a measure of task performance by the environment. The observation may for example comprise a measurement from the environment, a KPI, etc. It will be appreciated that a wide range of possible observations may be obtained for a communication network environment, which may comprise one or more network cells and/or cell sectors, or may comprise some other part of the communication network. Depending on the use case of interest, the dataset of observations may comprise network logs, logs from radio base stations, images captured from cameras, etc. Example use cases may be envisaged in which the observations are kept at a course level (for example network throughput of a flow), along with hidden metrics that may be derived from such observations. In other examples, fine grained logs of individual features may be appropriate as observations. It will be appreciated that there is generally a trade-off between complexity of the model accepting the observations and accuracy of the model outputs.

Example observations obtained at step 340 may include:
a value of a network coverage parameter;
a value of a network capacity parameter;
a value of a network congestion parameter;
a current network resource allocation;
a current network resource configuration;
a current network usage parameter;
a current network parameter of a neighbour communication network cell;
a value of a network signal quality parameter;
a value of a network signal interference parameter;
a value of a network power parameter;
a current network frequency band;
a current network antenna down-tilt angle;
a current network antenna vertical beamwidth;
a current network antenna horizontal beamwidth;
a current network antenna height;
a current network geolocation;
a current network inter-site distance;
horizontal sector shape;
Value of throughput observed on a network link;
Value of latency experienced by a packet;
Number of packets dropped or retransmitted by the network;
Number of images transmitted and resolution;
Features extracted from images, etc.

The observations may be specific to the environment or to a part of the environment, or they may encompass observations that reflect performance of the network on a wider level.

Example KPIs that may be included as observations may include:
- 'Low RSRP Samples Rate Edge (%)'
- 'Low RSRP Samples Rate (%)'
- 'DL Radio Utilization (%)'
- 'Neighbor DL Radio Utilization (%)'
- 'UL Radio Utilization (%)'
- 'Neighbor UL Radio Utilization (%)'
- 'Number of Cells High Overlap High Rsrp Src Agg (%)'
- 'Number of Cells High Overlap High Rsrp Tgt Agg (%)'
- 'E-RAB Retainability - Percentage Lost (%)'
- 'PDCCH CCE High Load (%)'
- 'Time Advance Overshooting Factor'
- 'Number of Times Interf (%)'
- 'Neighbor PDCCH CCE High Load (%)'
- 'Num Calls'
- 'Cell Range Distance'
- 'DL Traffic (kbps)'
- 'UL Traffic (kbps)'
- 'Inter Site Distance (Km)'
- 'RRC Congestion Rate (%)'
- 'Neighbor RRC Congestion Rate (%)'
- 'Throughput of a link / flow (transactions/sec)';
- 'Latency measurement (s) for a link or flow';
- 'Utilization of a network component (router, switch, edge server)';
- 'Packet loss';
- 'Packet delay (s)';
- 'Queue length measurement';
- 'Image contour mapping accuracy';
- 'Image labelling with known tags';
- 'Image noise ratio', etc.

Observations may be obtained from different network nodes, depending on the environment to be managed. For example, for network devices, the observations may be obtained from counters or logs at the individual devices. In addition, network monitoring packets may be interspersed with data packets to estimate observations. For radio access nodes, cell tower logs provide historical data. In addition, signalling between a UE and radio access nodes provides data on the channel information that may be used for signal strength. In robotics use cases, robotic sensors provide observations of location, imaging and mapping of environment.

In some examples, features may be extracted from the obtained observations before continuing with subsequent method steps.

Referring still to Figure 3b, in step 345, the training node obtains a value of the reward function as a consequence of execution of the selected action. In some examples, the obtained value of the reward function may be used to update a function for predicting reward value. This reward prediction function may be used by the first function in mapping belief state to the action that is predicted to generate the maximum future reward. The reward function may be a function of one or more obtained observations, belief states, selected actions etc, and so may be calculated by the training node following obtaining of the observation(s) in step 340.

In step 350, the training node uses a second policy function to generate an updated current belief state of the environment based on the obtained observation, and on a probability that an explanation for the selected action would be accepted by an entity querying the selected action, the explanation being generated using the explanation tree for the selected action. As illustrated at 350a, this may comprise computing the updated belief state as the product of first and second conditional probability distributions over possible operational states in which the environment may exist, wherein:
(i) the first conditional probability distribution is conditional upon the current belief state, the obtained observation, and the selected action, and
(ii) the second conditional probability distribution is conditional upon the current belief state, the selected action and the probability that an explanation for the selected action would be accepted by an entity querying the selected action, the explanation being generated using the explanation tree for the selected action.

Further discussion of belief state update calculation is provided below, with reference to example implementations of methods of the present disclosure.

In step 352, the training node receives from an entity a query relating to a selected action. As discussed above, the entity may comprise any logical entity that is authorized and able to query an action executed in the environment. The querying entity may be physical or virtual, including for example a stakeholder of the environment such as a network operator, network service provided or network user, and/or a model of such a stakeholder.

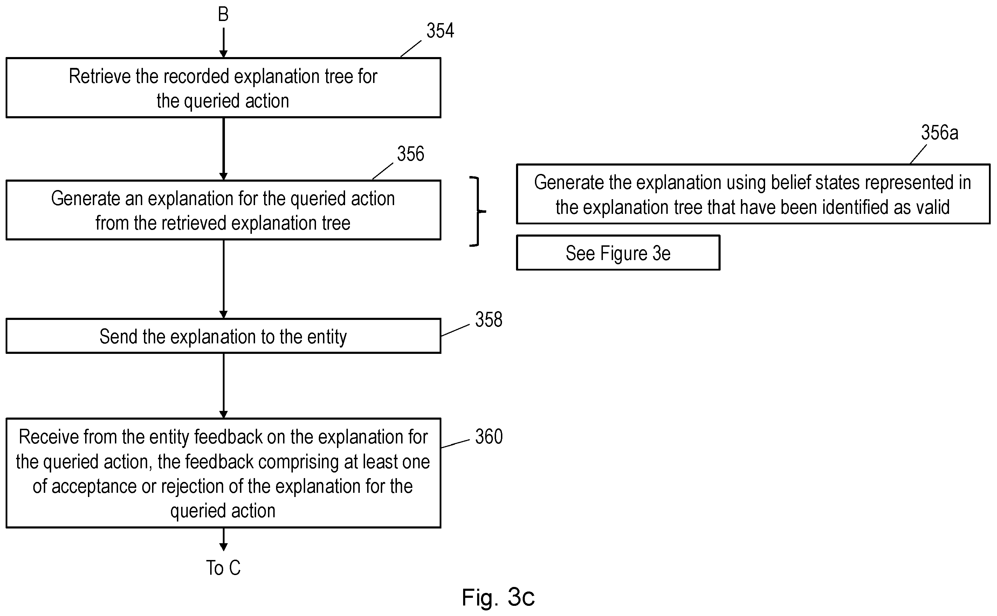

Referring now to Figure 3c, the training node retrieves the recorded explanation tree for the queried action in step 354. For example, the training node may retrieve the recorded explanation tree for the queried action from a memory in which selected actions and their corresponding explanation trees are saved. In step 356, the training node generates an explanation for the queried action from the retrieved explanation tree. As illustrated at 356a, this may comprise generating the explanation using belief states represented in the explanation tree that have been identified as valid (valid belief states being discussed in further detail below).

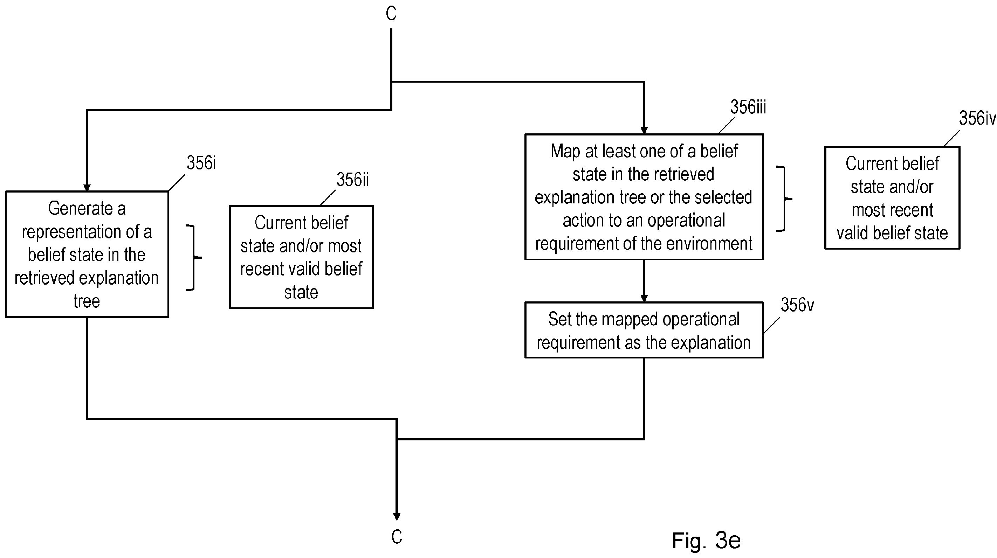

The step 356 of generating an explanation for the queried action from the retrieved explanation tree may be carried out as a series of sub-steps, as illustrated in Figure 3e.

Referring to Figure 3e, different sub-steps may be carried out according to the nature of the explanation to be generated. In one example, as illustrated on the left of Figure 3e, the training node generates a representation of a belief state in the retrieved explanation tree in step 356i. In some examples, the explanation may further include an indication that the selected action was predicted to provide the greatest future reward for the represented belief state. As illustrated at 356ii, the training node may generate a representation of at least one of the current belief state at the time the queried action was selected and/or the most recent valid belief state at the time the queried action was selected.

In another example, the environment may be subject to a plurality of operational requirements, and the reward function may be operable to reward compliance with the operational requirements. Operational requirements may for example include specifications of specific actions to be taken in specific states, states to be avoided, etc. In such examples, as illustrated on the right of Figure 3e, and generating an explanation for the queried action from the retrieved explanation tree may comprise mapping at least one of a belief state in the retrieved explanation tree or the selected action to an operational requirement of the environment in step 356iii, and setting the mapped operational requirement as the explanation in step 356v. As illustrated at 356iv, the belief state that is mapped to an operational requirement of the environment may comprise the current belief state at the time the queried action was selected and/or the most recent valid belief state at the time the queries action was selected.

Referring again to Figure 3c, after generating an explanation for the queried action at step 356, the training node sends the explanation to the entity in step 358. In step 360, the training node receives from the entity feedback on the explanation for the queried action, the feedback comprising at least one of acceptance or rejection of the explanation for the queried action.

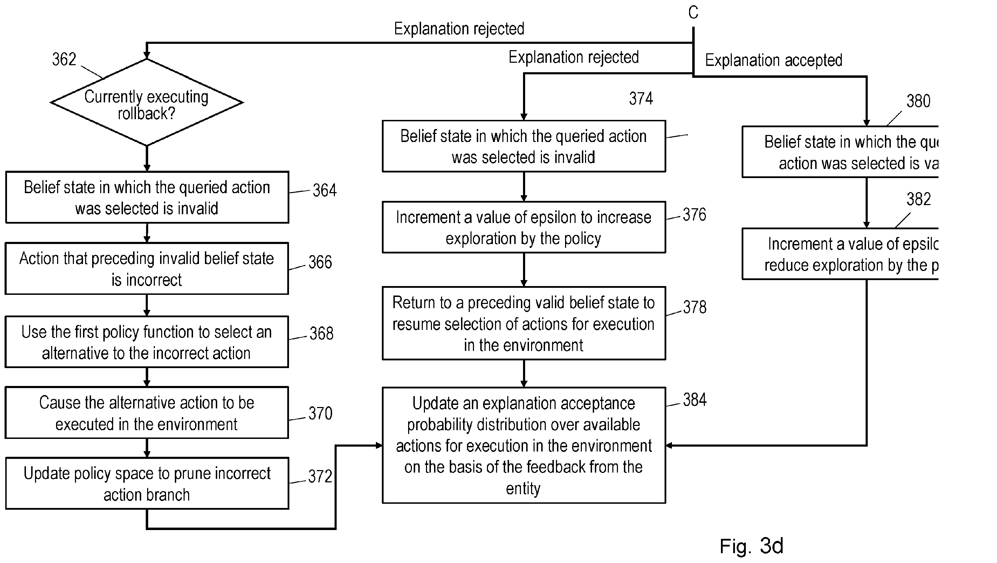

Referring now to Figure 3d, subsequent actions by the training node in accordance with the method 200 may depend upon the nature of the feedback received (acceptance or rejection). If the explanation is rejected, Figure 3d illustrates two different process paths for the training node, these process paths may be summarized as "rollback and pruning", illustrated on the left of Figure 3d, and "epsilon-greedy exploration", illustrated in the center of Figure 3d.

The rollback and pruning process path involves incrementally rolling back belief states leading to actions whose explanation was rejected and trying alternative actions until an explanation for a queried action is accepted. Incorrect action branches in the policy space of the policy, that is actions that resulted in an incorrect belief state, may be pruned from the policy space, to ensure an incorrect action is not selected again from the same belief state.

Referring to Figure 3d, in a first step of the rollback and pruning process path, the training node may initially check, at step 362, whether or not the training node is currently executing a rollback process, having already tried alternative actions from a particular belief state. In step 364, the training node identifies as an invalid belief state the belief state in which the queried action was selected. As discussed above, if an explanation for a selected action is not accepted, then the selected action was inappropriate for the environment circumstances, suggesting that the belief state on which the action selection was based may be incorrect, and this is the rationale for identifying the belief state in which the action was selected as invalid. In step 366, the training node identifies as an incorrect action the selected action that preceded the invalid belief state. Thus if the explanation for action aₙ was rejected, and belief state bₙ (in which action aₙ was selected) has been identified as invalid, then action aₙ₋₁, following which the belief state was updated to belief state bₙ, is identified as incorrect, as it resulted in an invalid belief state. In step 368, the training node then, from the belief state in which the incorrect action was selected (that is from belief state bₙ₋₁ to continue the above example), uses the first policy function to select an action for execution in the environment other than the incorrect action. In step 370, the training node causes the selected action to be executed in the environment. Steps 364 to 370 thus implement a one-step roll back from the belief state in which an action whose explanation was rejected was selected, followed by attempting an alternative action.

As illustrated in step 372, the training node may additionally update the policy space of the policy such that the first policy function is prevented from selecting the incorrect action (action aₙ₋₁) from the belief state in which the incorrect action was selected (bₙ₋₁). This may comprise pruning the policy space of the policy to remove the action branch that corresponds to selection of the incorrect action (aₙ₋₁) in the relevant belief state (bₙ₋₁). For the purposes of the present disclosure, the policy space of the policy comprises the actions available for selection by the policy in the various belief states. Preventing the policy from selecting the incorrect action from the belief state in which it was selected may therefore be achieved by removing the policy branch that yielded the incorrect explanation. In the event of additional queries received and explanations rejected, the training node may repeat the rollback and pruning of steps 364 to 372 until an explanation for a queried action is accepted. The number of times that rollback and pruning has already been conducted determines how much further back in the belief states of the policy space the training node should explore. As discussed above, rollback and pruning will continue until an explanation for a queried action is accepted, or until a previously validated belief state is reached.

Referring still to Figure 3d, the epsilon-greedy exploration process path involves performing epsilon-greedy exploration of the state action space of the environment, in which the value of epsilon is incremented on the basis of accepted or rejected action explanations. In an epsilon-greedy process, the value of epsilon controls the balance between exploring the state action space of an environment and exploiting existing knowledge of the state action space to maximise reward. By only incrementing epsilon on the basis of explanation feedback: increased exploration in the event of a rejected explanation, and increased exploitation in the event of an accepted explanation, the training node may ensure that the degree of exploration is guided by the entity feedback, and not just be reward function values, which may be influenced by noisy or uncertain observations. In the event of a rejected explanation, epsilon-greedy exploration may be conducted from the last valid belief state.

As illustrated in the centre of Figure 3d, in a first step the epsilon-greedy exploration process path, the training node identifies as an invalid belief state the belief state in which the queried action was selected, as discussed above with reference to step 364. In step 376, the training node increments the value of epsilon to increase exploration by the policy. In step 378, the training node then returns to a preceding valid belief state to resume selection of actions for execution in the environment.

Referring still to Figure 3d, if the explanation for the queried action is accepted by the querying entity, then, as illustrated on the right of Figure 3d, the training node first identifies as a valid belief state the belief state in which the queried action was selected. As discussed above, if an explanation for an action is accepted by a querying entity, this suggests that the action was acceptable under the circumstances in which it was selected, and consequently that the belief state on which the action selection was based was correct. In step 376, if the first policy function uses an epsilon-greedy process for selecting an action the training node increments the value of epsilon to reduce exploration by the policy.

Regardless of the nature of the feedback received (acceptance or rejection of the explanation), and of the process path followed in the event of rejection, the training node then, following either step 372, step 378, or step 382, updates an explanation acceptance probability distribution over available actions for execution in the environment on the basis of the feedback from the entity. In this manner, the feedback from the entity informs the value of the explanation probability that is used to update belief state at each iteration of the method 200 (following each action selection). Thus, while the feedback from a querying entity may be relatively sparse, for example if only a small proportion of executed actions are queries, this feedback informs each belief state update via the updated explanation probability distribution.

As discussed above, the training node carrying out examples of the methods 200, 300 may encompass multiple logical entities. In some examples, these logical entities may comprise a POMDP agent and an explainer agent. Examples of the present disclosure also propose methods carried out by such agents, which methods cooperate to result examples of the methods 200, 300.

According to one example of the present disclosure, there is provided a computer implemented method for training a policy for managing an environment in a communication network, wherein the environment is operable to perform a task, the method, performed by a POMDP agent, comprising:
using a first policy function to select an action for execution in the environment, which action will maximise a future predicted value of a reward function for task performance, given a current belief state of the environment, wherein the current belief state of the environment comprises a probability distribution over possible operational states in which the environment may exist;
recording an explanation tree for the selected action, wherein the explanation tree comprises a representation of:
   the current belief state of the environment;
   available actions that could be executed in the environment; and
   predicted reward function values associated with the available actions;
causing the selected action to be executed in the environment;
obtaining an observation of the environment following execution of the selected action, the observation comprising a measure of task performance by the environment; and
using a second policy function to generate an updated current belief state of the environment based on the obtained observation, and on a probability that an explanation for the selected action would be accepted by an entity querying the selected action, the explanation being generated by an explainer agent using the explanation tree for the selected action.

According to another example of the present disclosure, there is provided a computer implemented method for facilitating training a policy for managing an environment in a communication network, wherein the environment is operable to perform a task, the method, performed by an explainer agent, comprising:
receiving from an entity a query relating to an action selected by a POMDP agent and executed in the environment;
retrieving a recorded explanation tree for the queried action;
generating an explanation for the queried action from the retrieved explanation tree and sending the explanation to the entity;
receiving from the entity feedback on the explanation for the queried action, the feedback comprising at least one of acceptance or rejection of the explanation for the queried action; and
informing the POMDP agent of the received feedback.

The method may further comprise identifying as either a valid or an invalid belief state the belief state in which the queried action was selected.

For the purpose of the present disclosure, an Agent comprises a physical or virtual entity that is operable to implement a policy for the selection of actions on the basis of an environment state. Examples of a physical entity may include a computer system, computing device, server etc. Examples of a virtual entity may include a piece of software or computer program, a code fragment operable to implement a computer program, a virtualised function, or any other logical entity. A virtual entity may for example be instantiated in a cloud, edge cloud or fog deployment.

As discussed above, the methods 200 and 300 may be performed by a training node, and the present disclosure provides a training node that is adapted to perform any or all of the steps of the above discussed methods. The training node may be a physical or virtual node, and may for example comprise a virtualised function that is running in a cloud, edge cloud or fog deployment. The training node may for example comprise or be instantiated in any part of a logical core network node, network management centre, network operations centre, Radio Access node etc. Any such communication network node may itself be divided between several logical and/or physical functions, and any one or more parts of the training node may be instantiated in one or more logical or physical functions of a communication network node.

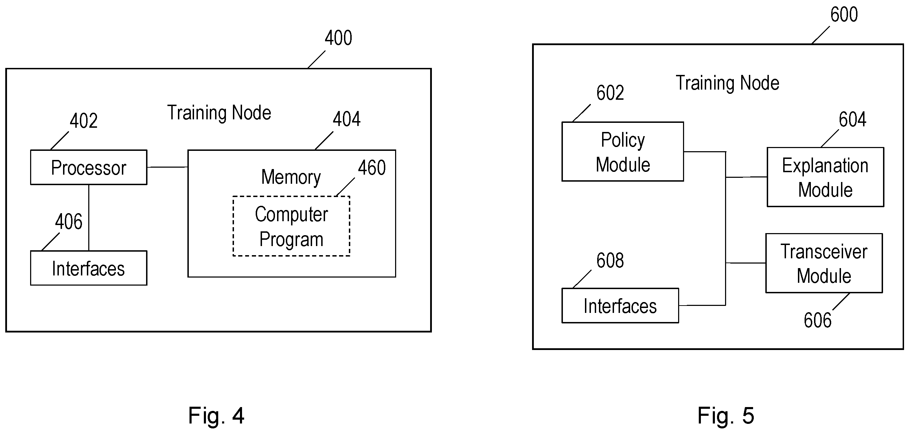

Figure 4 is a block diagram illustrating an example training node 400 which may implement the method 200 and/or 300, as illustrated in Figures 2 and 3a to 3e, according to examples of the present disclosure, for example on receipt of suitable instructions from a computer program 450. Referring to Figure 4, the training node 400 comprises a processor or processing circuitry 402, and may comprise a memory 404 and interfaces 406. The processing circuitry 402 is operable to perform some or all of the steps of the method 200 and/or 300 as discussed above with reference to Figures 2 and 3a to 3e. The memory 404 may contain instructions executable by the processing circuitry 402 such that the training node 400 is operable to perform some or all of the steps of the method 200 and/or 300, as illustrated in Figures 2 and 3a to 3e. The instructions may also include instructions for executing one or more telecommunications and/or data communications protocols. The instructions may be stored in the form of the computer program 450. In some examples, the processor or processing circuitry 402 may include one or more microprocessors or microcontrollers, as well as other digital hardware, which may include digital signal processors (DSPs), special-purpose digital logic, etc. The processor or processing circuitry 402 may be implemented by any type of integrated circuit, such as an Application Specific Integrated Circuit (ASIC), Field Programmable Gate Array (FPGA) etc. The memory 404 may include one or several types of memory suitable for the processor, such as read-only memory (ROM), random-access memory, cache memory, flash memory devices, optical storage devices, solid state disk, hard disk drive etc. The training node 400 may further comprise interfaces 406 which may be operable to facilitate communication with a manged environment, querying entity, and/or with other communication network nodes over suitable communication channels.

Figure 5 illustrates functional modules in another example of training node 500 which may execute examples of the methods 200 and/or 300 of the present disclosure, for example according to computer readable instructions received from a computer program. It will be understood that the modules illustrated in Figure 5 are functional modules, and may be realised in any appropriate combination of hardware and/or software. The modules may comprise one or more processors and may be integrated to any degree.

Referring to Figure 5, the training node 500 is for training a policy for managing an environment in a communication network, wherein the environment is operable to perform a task. The training node 500 comprises a policy module 502 for using a first policy function to select an action for execution in the environment, which action will maximise a future predicted value of a reward function for task performance, given a current belief state of the environment. The current belief state of the environment comprises a probability distribution over possible operational states in which the environment may exist. The training node also comprises an explanation module 504 for recording an explanation tree for the selected action, wherein the explanation tree comprises a representation of the current belief state of the environment, available actions that could be executed in the environment, and predicted reward function values associated with the available actions. The policy module 502 is also for causing the selected action to be executed in the environment. The training node also comprises a transceiver module 506 for obtaining an observation of the environment following execution of the selected action, the observation comprising a measure of task performance by the environment. The policy module 502 is also for using a second policy function to generate an updated current belief state of the environment based on the obtained observation, and on a probability that an explanation for the selected action would be accepted by an entity querying the selected action, the explanation being generated by the explanation module 504 using the explanation tree for the selected action. The training node may further comprise interfaces 508 which may be operable to facilitate communication with any other communication network nodes over suitable communication channels.

Figures 1 to 3e discussed above provide an overview of methods which may be performed according to different examples of the present disclosure. These methods may be performed by a training node, as illustrated in Figures 4 and 5. There now follows a detailed discussion of how different process steps illustrated in Figures 2 to 3e and discussed above may be implemented.

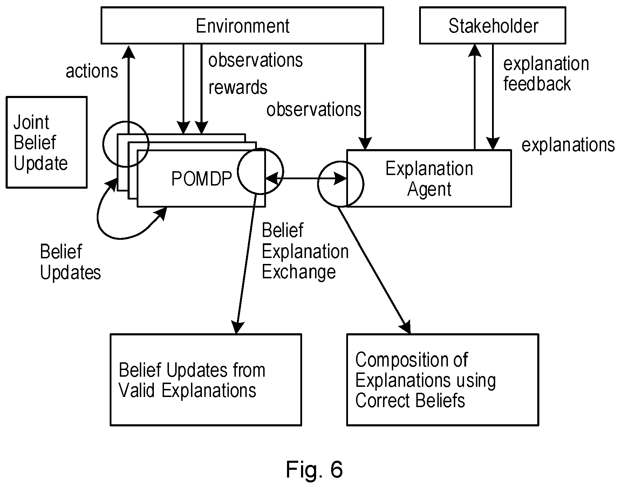

Figure 6 illustrates an example architecture for implementing methods according to the present disclosure. In the example architecture of Figure 6, the training node is implemented as two logical entities: a POMDP agent and an Explainer agent. Referring to Figure 6, the POMDP agent interacts with the environment, and receives observations and rewards at each time step. The POMDP agent uses this information to update its internal beliefs. The standard belief update equation for a POMDP process is: $b ′ \left(s′\right) = {O}_{p} \left(o\left|s′,a\right.\right) {\sum }_{s ∈ S} T \left(s′\left|s, a\right.\right) b \left(s\right)$

However, in the illustrated architecture, this equation is modified to take account of explanation probabilities, as discussed below.

The explanation agent provides, on request from a stakeholder of the environment, explanations for the actions executed in the environment. These explanations are either accepted or rejected by the stakeholder in explanation feedback provided to the explainer agent. This explanation feedback is used both to validate or invalidate belief states, and to improve the updating of belief states at each time step, by using a probability that a given explanation will be accepted as an additional input to the belief update equation. In this manner, the explanation probabilities act as an additional observation, representing stakeholder input. Additionally, invalid belief states can be pruned from the policy tree, and valid belief states can be saved as conceptual "milestones", representing a moment at which input from the stakeholder has confirmed that the belief state is correct. Using the underlying belief states, explanations are generated (assuming correct reasoning through abduction or deduction) on the basis of an explanation tree recorded at the time an action is selected by the POMDP agent. The feedback received on these explanations is used as a baseline to propagate correct beliefs. Gradually, this will result in improved action selection, and consequently fewer rejections of explanations for queried actions, as actions are selected on the basis of belief states that have been validated, or generated using explanation probabilities based on stakeholder feedback.

The following sections discuss in detail the operation of the POMDP model, that is the use of first and second policy functions to select actions and update belief states, the generation of explanations, and the processing of explanation feedback.

### POMDP Model

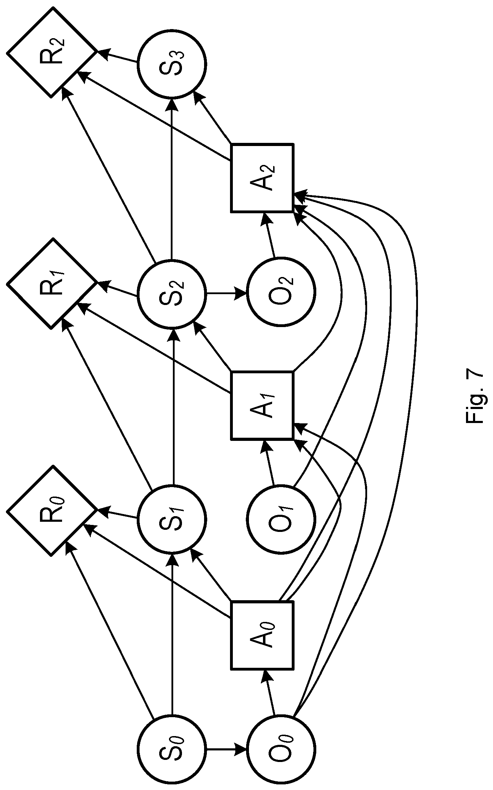

As discussed above, a Partially Observable Markov Decision Process (POMDP) models the relationship between an agent and its environment. Figure 7 illustrates progression of a POMDP though different environment states. As illustrated in Figure 7, at each time instance, an agent managing its environment in state S takes an action A. This transitions the agent to a new state S', dependent on the conditional transition probabilities T. The agent receives a reward for the action R(S, A). It also receives an observation O from which it must estimate the underlying environment state. The goal is for the agent to choose actions at each time step that maximize its expected future discounted reward.

Formally, a POMDP consists of:
*S* set of states
*A* set of actions
*T* set of conditional probability transitions between states
*R* reward function mapping states and actions
*O* set of observations
*Oₚ* set of observation probabilities
gÎ[0,1] discount factor

As the agent does not directly observe the environment's state, the agent must make decisions under uncertainty of the true environment state. However, by interacting with the environment and receiving observations, the agent may update its belief in the true state by updating the probability distribution of the current state. After having taken the action a and observing o, an agent needs to update its belief in the state the environment may be in. The state is probabilistic, and so maintaining a belief over the states only requires knowledge of the previous belief state, the action taken, and the current observation.

The belief update process from an initial belief b(s) after taking action a and observation o is given by: $b ′ \left(s′\right) = {O}_{p} \left(o\left|s′,a\right.\right) {\sum }_{s ∈ S} T \left(s′\left|s, a\right.\right) b \left(s\right)$ (1)

The value iteration over the state - action space is contingent on identifying the correct belief set that maximizes rewards.

Examples of the present disclosure propose updating the POMDP model described above with additional (multi-modal) explanation probabilities as observations. These probabilities are based on explanation feedback received from a querying entity, such as a stakeholder, and the POMDP model is updated with the probabilities that a given explanation will be accepted, based on the explanation feedback received. These explanation probabilities are used for belief state updates:
Initial belief: b₀(s)=P(S=s). This remains the same as for a conventional POMDP.

Transition probabilities: T(s,a,s')= P (s'|s,a). These are also the same as for a conventional POMDP.

Actions: Action a at state s enhanced to <a, e> where a is the action, and e is the explanation tree around s (past and future paths). This is not a design time construct but depends on the policy, so whenever a is selected by the policy, what is executed is <a, e>: action a is output to the managed system or environment for execution, and explanation tree e is output to a memory or other storage function. The explanation tree will serve as the basis for an explanation of the action a, should that action be queried.

Observation probabilities: O(s',a,o)= P (o|s',a). These remain the same as for a conventional POMDP.

Explanation feedback probabilities: E(s',a,e) = P (e|s', a). This is an additional (multi-modal) observation input provided to POMDP. Explanation probabilities are the probability that an explanation provided at a particular state would be accepted by the querying entity or stakeholder.

Belief state updating: b'(s') = P(s'lo, a, b) P(s'|e, a, b). This is the product of a term using conventional observations and a term incorporating the explanation probabilities, and consequently incorporating insight from the explanation feedback.

Rewards: R(s,a,e). The rewards are updated with the explanation feedback incorporated.

The Bellman update function for the POMDP is then given by: $V * \left(b\right) = \begin{matrix}max \\ a ∈ A\end{matrix} \left[{\sum }_{s ∈ S} b \left(s\right) R \left(s, a, e\right) + γ {\sum }_{o ∈ O} P \left(o\left|b, a\right.\right) V * \left({b}_{0}^{a}\right) {\sum }_{e ∈ E} P \left(e\left|b, a\right.\right) V * \left({b}_{0}^{a}\right)\right]$

The value iteration function is therefore updated by making use of the explanation feedback received from the stakeholders. The action and corresponding explanation go hand-in-hand. Negative feedback for an explanation triggers alternative actions / rollbacks as discussed below. Positive feedback validates belief states and can be used to construct explanations.

### POMDP Explanations

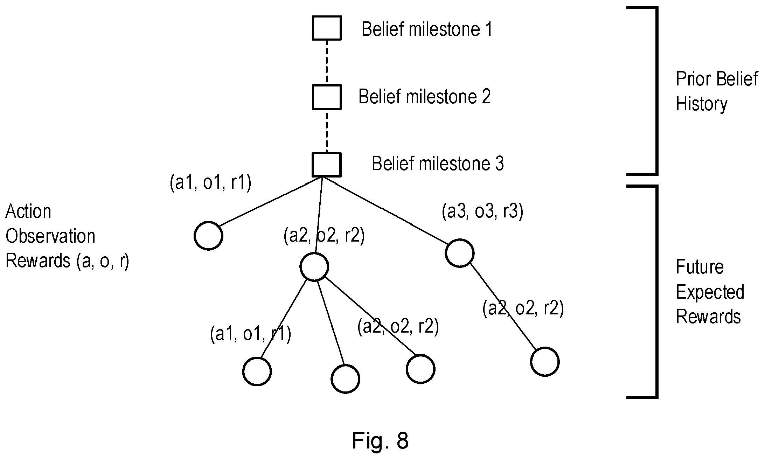

Explanations concerning the outputs of POMDP models may be created in the form of policy graphs or decision trees as illustrated in Figure 8. An explanation tree is output for each selected action. The explanation provided to a querying entity may comprise a representation of the explanation tree for that action, or may be based on the explanation tree in some other way, for example through mapping of elements of the explanation tree to operational requirements for the environment etc. This is discussed in greater detail below.

The explanations are typically provided as a response to questions raised on the reason for a particular action, KPI level or path. The explanation tree on which an explanation is based may make use of the decision tree formalism, wherein the tree to N levels prior to current action presents the sets of beliefs, possible states, KPIs and objective functions that expose the reasoning behind the current decisions.

Current decision depends upon the current belief state, and the way it evolves in the future depending upon possible inputs. There are consequently two sub-questions that are to be answered as part of the explanation process:
1. Why this belief state? (the answer to this question is provided by the past history of the policy tree)
2. Why this action? (the answer to this question is provided by the possible future paths in the policy tree)

An explanation three structure thus resembles a sequence leading to the current belief state and then a fan out of the future. As illustrated in Figure 8, the explanation tree may be constructed using prior validated belief states, or "belief milestones" as well as the most likely future action steps that would maximize the expected reward. These weave into the model update thanks to correct explanations as well as the value interaction over expected outcomes.

### Updating belief states with explanation probabilities

Belief states using an additional input observation in the form of explanation probabilities. Given a set of explanations E and the corresponding explanation probabilities Eₚ, the belief update equation (eq. 1) now becomes: $b ′ \left(s′\right) = {E}_{p} \left(e\left|s′,a\right.\right) {O}_{p} \left(o\left|s′,a\right.\right) {\sum }_{s ∈ S} T \left(s′\left|s, a\right.\right) b \left(s\right)$ (2)

This adds in the probability that an explanation for a given action will be accepted by a querying entity or stakeholder as an additional factor to consider for belief updates. It will be appreciated that there may be some transitions without any explanation probabilities, and in such transitions the original belief update equation, taking account only of observation and transition probabilities, may be used to update the belief state.

While the explanation probabilities are used at each time step to update belief states, not every action will be queried, and so explanation feedback may be relatively sparse. On receiving explanation feedback (accepted or rejected explanation), there are various options for how this feedback may be incorporated into the policy training process:
Correct explanations matching with the underlying belief states may result in updating and/or addition of explanation probabilities, and/or additional reward being added to decisions that led to correct beliefs. Similar updating to explanation probabilities and reduction of reward may be performed following feedback regarding an incorrect explanation.

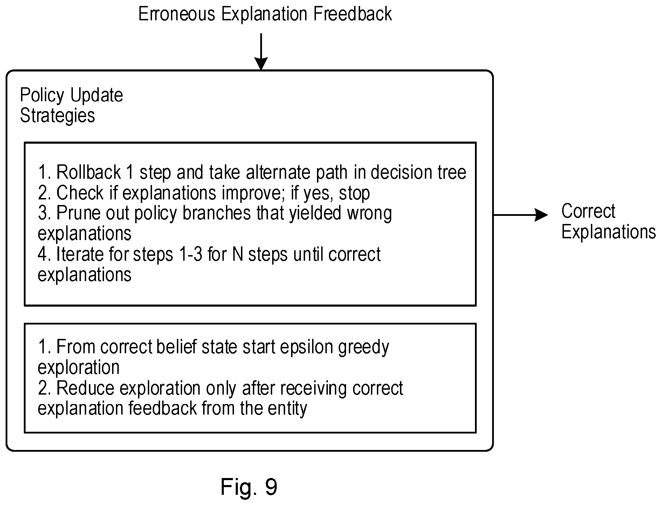

Two possible policy paths following feedback indicating a rejected explanation are illustrated in Figure 9. In one example, incorrect beliefs (belief states leading to an action whose explanation was rejected) may result in pruning of some parts of the policy generated. The initial strategy is to rollback certain beliefs and find alternate paths in the policy decision tree, which paths yield correct explanation. This feature may be exploited when the same state is reached in future Monte-Carlo runs of the model. This also results in pruning out parts of the policy space that have erroneous beliefs. For example, the policy tree may be rolled back one stage to try an alternative action to the one that lead to the incorrect belief state. The alternative action may be selected by recomputing of the optimal policy taking account of updated explanation probabilities and with the limitation that the incorrect action should not be selected. The policy may then continue along this new branch of the policy tree until another action is queried and explanation feedback received. If explanation feedback improves then the rollback can stop and policy branches that yielded incorrect explanations can be pruned from the policy tree. If another explanation is rejected then the rollback continues, iterating through steps 1 to 3 in the top part of Figure 9 until an explanation is accepted. This process essentially prunes out incorrect beliefs, helping build more robust POMDP models. It is also possible to dynamically replace one sub-branch of a policy tree with another, if there are a limited set of belief states possible (negation of one belief implies acceptance of the alternative).

Explanation feedback may also be used to update the reward function. Rejection of an explanation may indicate either that there is change in the environment or that the reward has not been correctly specified. This can be modified through explanations that identify defects in the underlying belief model.

In another example, an Epsilon-Greedy approach may be taken to belief update. While generating a management policy, an agent generally acts according to its current knowledge in a greedy manner in the pursuit of rewards, a process referred to as exploitation. Acting greedily based on limited knowledge of the environment makes it very unlikely however that an agent will learn the optimal behaviour in the environment. When an agent performs exploration, it does not necessarily act tin accordance with its knowledge, instead it explores different options available, as dictated by some exploration strategy. Epsilon-greedy (ε-greedy) is one of the most popular strategies to balance exploration and exploitation. Here, with probability ε the agent takes a random action, and with probability 1-ε the agent takes the best action according to its current knowledge. It will be appreciated that exploration is more important when the agent does not have enough information about the environment its interacting with.

While traditional epsilon-greedy approaches decay in a uniform manner, examples of the present disclosure propose, in the example policy path illustrated in the lower part of Figure 9, including explanation feedback to control exploration towards an optimal policy. Only when an agent has crossed some reward/explanation threshold is the value of ε reduced:

```
 if explanation_reward mapsto correct then
     e <- decay(e)
     Explanation_reward <- increment(explanation_reward)
 endif
```

Explanation acceptance ranges from -1 to +1, and the above procedure adds increased exploration when the explanations are not accepted. Explanations are also improved with increased exploration, and this process assists with ensuring that the feedback from explanations are correctly incorporated into the POMDP update model.

### Improving explanations using valid beliefs

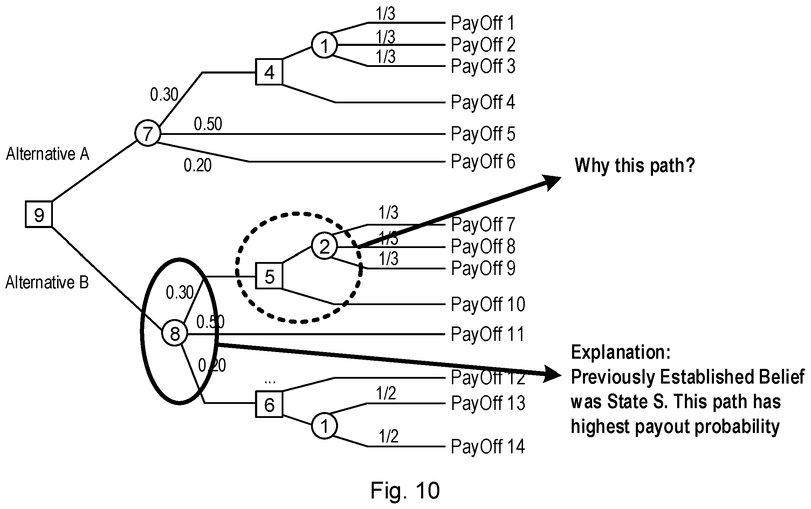

Figure 10 provides an overview of how explanations may be structured for uncertain models such as POMDPs. According to examples of the present disclosure, given one or more correct explanations that are accepted by a querying entity, and the corresponding valid belief states, explanations may be composed hierarchically based on these "milestones". Thus, only parts of the decision tree that consist of correct beliefs may be revealed as the explanation, or may be used to construct the explanation. In this manner, explanations may be based upon belief states that have been identified as valid, and on future paths that maximize expected rewards. This increases the accuracy of the explanation and reduces state-space explosion over the (infinite) belief space.

### Stakeholder inputs during training

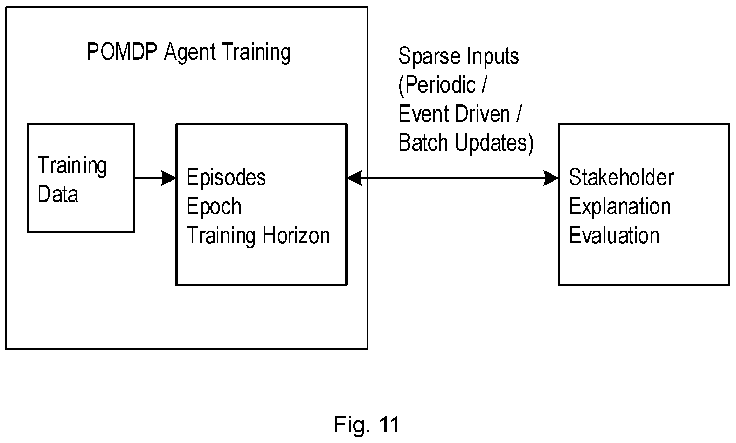

Figure 11 presents a view of a querying entity, in this example a stakeholder of the managed environment, interacting with the POMDP training process. The policy for managing the environment is trained using both the environment's training data and sparse inputs from the stakeholder in the form of explanation feedback. This feedback is used both to validate belief states and to update explanation probabilities that are used in the belief state updating process. Periodic, batch or event driven inputs from stakeholders can be incorporated, according to the training process and the use case.

Given a target training domain D_{T} and learning task T_{T}, using the knowledge inputs provided by the stakeholder explanation feedback S_{T}, the predictive function in task T_{T} could be arrived at more quickly than with training data alone. This concept is similar to transfer learning, in which accurate inputs from other domains (here the explanation feedback from the stakeholder) can improve the learning process significantly.

### Explanations

As discussed above, the explanations provided to a querying entity may take different forms, including an extract of the explanation tree for a given action, or a mapping to operational requirements for the environment. In some examples, the query that triggers generation of the explanation may make use of templated questions of the contrastive form. The templates may for example take the form: *"Why A rather than B?",* where A is the *fact* (what occurred in the plan) and B is the *foil* (the hypothetical alternative expected by the stakeholder). The formal questions may be templated as follows:
- *"Why is action A used in the plan, rather than not being used?"* If an incorrect explanation for this query is received, this constraint would prevent the action A from being used in the plan.
- *"Why is action A not used in the plan, rather than being used?"* If an incorrect explanation for this query is received, this constraint would enforce that the action A is applied at some point in the plan.
- *"Why is action A used, rather than action B?"* This constraint is a combination of the previous two, which would, if an incorrect explanation is received, enforce that the plan include action B and not action A.
- *"Why is action A used before*/*after action B (rather than after*/*before)?"* If an incorrect explanation for this query is received, this constraint enforces that if action A is used, action B must appear earlier/later in the plan.
- *"Why is action A used outside of time window W, rather than only being allowed inside W?"* If an incorrect explanation for this query is received, this constraint forces the planner to schedule action A within a specific time window.

It will be appreciated that is the explanation provided in response to the above queries is accepted by the querying entity, then no changes will be enforced in the policy as a consequence of the query. The above noted changes are conditional upon the explanation for the respective query being rejected by the querying entity.

According to one example of the present disclosure, explanations may be generated using the Easy Approach to Requirements Syntax (EARS) process. EARS has been shown to drastically reduce or even eliminate the main problems typically associated with natural language (NL) requirements. EARS defines various types of operational requirements for the environment or system under consideration:
1. **Ubiquitous requirements:** are always active; they are not invoked by an event or input, nor are they limited to a subset of the system's operating states.
   *The <system name> shall <system response>*
2. **State-driven requirements:** are active throughout the time a defined state remains true.
   *WHILE <in a specific state> the <system name> shall <system response>*
3. **Event-driven requirements:** require a response only when an event is detected at the system boundary.
   *WHEN <trigger> the <system name> shall <system response>*
4. **Optional feature requirements:** apply only when an optional feature is present as a part of the system
   *WHERE <feature is included> the <system name> shall <system response>*
5. **Unwanted behavior requirements:** 'Unwanted behavior' is a general term used to cover all situations that are undesirable.
   *IF <trigger>, THEN the <system name> shall <system response>*

If no useful explanation feedback is provided (for example either the explanation feedback arrives after training is completed or the explanation feedback is itself incomplete), the POMDP agent can train exhaustively on the environment dataset without any stakeholder input. If suitable feedback is provided at certain periodic intervals or following certain events in the training phase, this external knowledge is incorporated within the model. This may improve the training for example by pruning away incorrect belief state branches. Off-policy updates could also be performed using collected batch inputs from the stakeholder.

It will be appreciated that, as discussed above, a querying entity, which may be a stakeholder of the environment may not be a human entity, for example a person asking questions, but is rather an interface between the environment and the training agent. Alternative implementations of this interface may be envisaged, for example statistics of valid/invalid explanations could be used to model a stakeholder "mimic" system that intervenes at appropriate periods during training.

### Difference Between Rewards, Explanations and Explanation Probabilities

For the avoidance of doubt, it will be appreciated that there exists an explicit difference between rewards, explanations, explanation feedback, and the explanation probabilities that are presented according to examples of the present disclosure as additional observations for the purpose of updating belief states. Rewards are pre-defined for each state and are dependent on the distribution of the environment / agent training inputs. Explanations are generated in response to queries of specific actions, and explanation feedback is consequently sparce, providing a more updated view of the environment. This can be used to modify the beliefs and the outputs of the agent with respect to the current state. Explanation feedback is also used to update the explanation probabilities that are used at each time step to update belief states. The use of explanation feedback allows for better adaptation to distribution shifts or dynamicity in the environment. As the agent has "partial observability" of the environment, including this feedback allows for better adaptation to distribution shifts or unforeseen events. Using explanation feedback may also reduce the need for repeated re-training owing to minor changes in the environment. Beliefs may be updated dynamically using explanation feedback, and this understanding flows through each time step using the explanation probabilities.

There now follows a discussion of some example use cases for the methods of the present disclosure, as well as description of implementation of the methods of the present disclosure for such example use cases. It will be appreciated that the use cases presented herein are not exhaustive, but are representative of the type of problem within a communication network which may be addressed using the methods presented herein. Many suitable use cases for the present disclosure fall into the class of use cases that may be described as network parameter optimization.

### Use Case 1 - Networking Devices

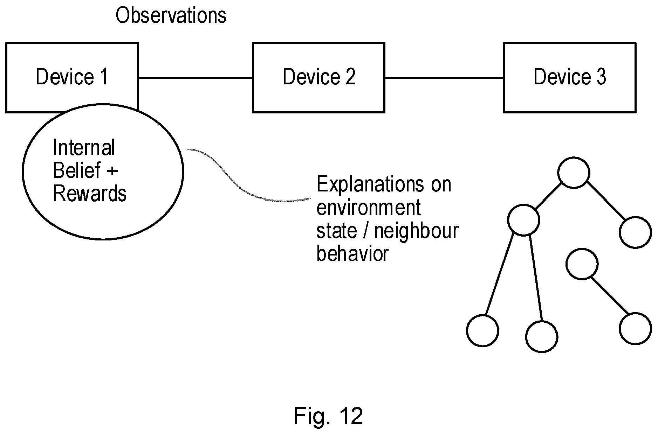

The first use case considers a set of networking devices as illustrated in Figure 12. The devices may for example be routers, switches, gateways, data center orchestrators, etc. and have partial visibility of the global state of the complex system of which they are a part. In this case, the devices are required to devise policies to tackle dynamicity in their environment, including changing traffic patterns, user requests, failures, etc. using limited information about the network. Any explanations or knowledge artifacts that are produced during training / deployment are used to identify valid belief states, and to update explanation probabilities that are incorporated in the updating of belief states, helping decipher the true underlying state.

Considering initially the transition, observation and action probability of device one, the internal state of the device is formulated to define to have granular states: low load, mid load, high load, and the device can perform internal configuration changes based on observations from internal sensors or neighboring devices. The relevant parameters for device 1 can be specified in POMDP format, suitable for input to value iteration solvers:

### States:

| | |
|---|---|
| #0 | Device1_Low_load |
| #1 | Device1_Medium_load |
| #2 | Device1_High_load |

### Actions:

#0 limit_incoming_traffic
#1 process_more_traffic

### Transition Probabilities:

Transition probabilities between states defined above (3x3 matrix describing state transitions with respect to each other following performance of a given action)
T: limit_incoming_traffic (state transition probabilities following execution of this action)

| | S#0 | S#1 | S#2 |
|---|---|---|---|
| S#0 | 1.0 | 0.0 | 0.0 |
| S#1 | 0.5 | 0.5 | 0.0 |
| S#2 | 0.1 | 0.3 | 0.6 |

### Observations:

#0 QoS deterioration
#1 QoS improvement

### Observation Probabilities:

The probability of observing a given observation if a specific action is taken in any possible state
O: limit_incoming_traffic: * : QoS_improvement 0.6
O: process_more_traffic: * : QoS_deterioration 0.5

### Explanation Feedback:

#0 Correct_Exaplanation
#1 Incorrect_Explanation

### Explanation Probabilities:

The probability that an explanation for a given action will be accepted when the action is taken in any possible state
O: limit_incoming_traffic: * : Correct_Explanation 0.8

### Rewards:

R: action: start state: end state: observation: reward
R: limit_incoming_traffic: Device1_High_load : * : QoS_improvement +10
R: limit_incoming_traffic: Device1_High_load : * : Correct_Explanation +20

It will be appreciated that is the above code snippet the Correct_Explanation is included as a further observation within the POMDP formulation of rewards. The second reward, based on receipt of a correct explanation feedback, is only available when an action has been queried and the explanation accepted by the querying entity. The training node may consequently update the total reward for a given action to include the additional reward from the correct explanation feedback. The explanations and explanation probabilities represent the additional knowledge gained from the feedback provided by a querying entity.

The following example steps may be used to integrate the explanation feedback:

### Question:

*Why is action* limit_incoming_traffic *used, rather than action process_more_traffic ?"*

### Explanation:

Ubiquitous requirements:
   *The network_configuration_system shall prevent QoS_Deterioration*
State-driven requirements:
   *WHILE in Deveice_High_Load state the network_configuration_system shall limit_incoming_traffic*
**Explanation Feedback:** (From environment inputs or internal model):
   Correct_Explanation

This feedback is incorporated as an additional observation to update the belief probabilities.

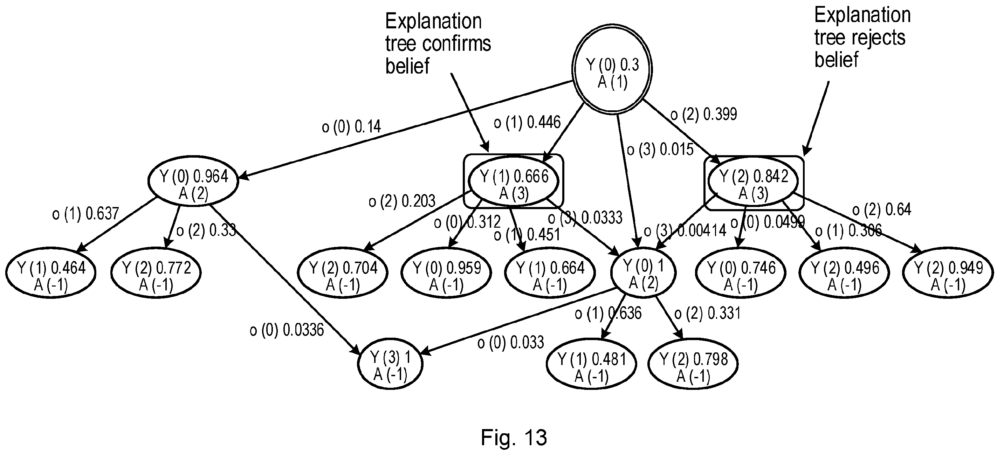

Figure 13 illustrates a POMDP policy graph updated with input explanation feedback during training which is used to update probabilities of whether an observation reveals the "true" state of the environment. This also helps reduce the search space during exploration as multiple belief states are pruned away in light of knowledge input from the querying entity. As described above, if explanations are rejected, implying incorrect belief states, parts of the policy graph can be pruned and/or replaced by alternate branches. Erroneous belief states can also trigger additional exploration (epsilon-greedy) in order to gather additional knowledge that will lead to optimal policies.

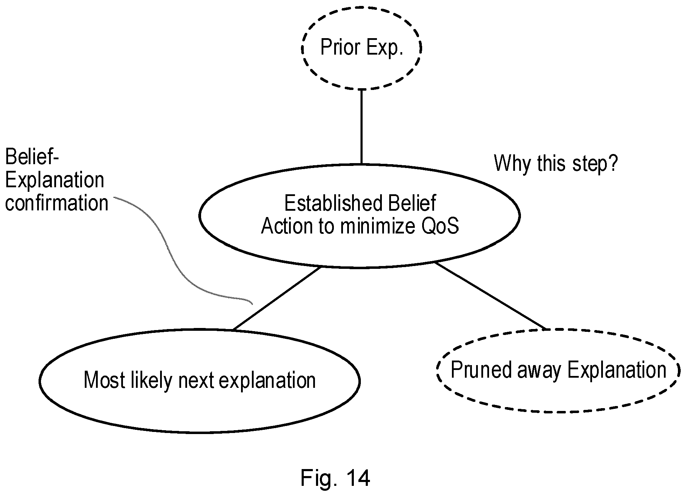

Figure 14 provides a further example of explanations being improved through validated belief states. The statement for a belief state to be true is that: if B(S), then if action A is taken then B'(S) holds. As there is confirmation that a particular milestone belief is true, explanations may be composed in the following manner:
At timestamp_(t - 1) the belief state of the agent was: Device1_High_load
The action taken at timestamp_(t - 1) was limit_traffic to maintain KPI
The current belief state at timestamp_(t) is Device1_Medium_load

The accuracy of the explanations is consequently also improved by belief propagation and revision.

According to one aspect of the present disclosure, there is provided a computer implemented method for training a policy for managing configuration of a communication network node, wherein the node is operable to process an input data flow, the method, performed by a training node, comprising:
using a first policy function to select a configuration action for execution on the network node, which action will maximise a future predicted value of a reward function for network node performance, given a current belief state of the network node, wherein the current belief state of the network node comprises a probability distribution over possible operational states in which the network node may exist;
recording an explanation tree for the selected configuration action, wherein the explanation tree comprises a representation of:
   the current belief state of the network node;
   available configuration actions that could be executed on the network node; and
   predicted reward function values associated with the available configuration actions;
   causing the selected configuration action to be executed on the network node;
   obtaining an observation of the network node following execution of the selected configuration action, the observation comprising a measure of network node performance; and
   using a second policy function to generate an updated current belief state of the network node based on the obtained observation, and on a probability that an explanation for the selected configuration action would be accepted by an entity querying the selected configuration action, the explanation being generated using the explanation tree for the selected configuration action.

### Use case 2 - Closed Loop RL Agent for Video Streaming

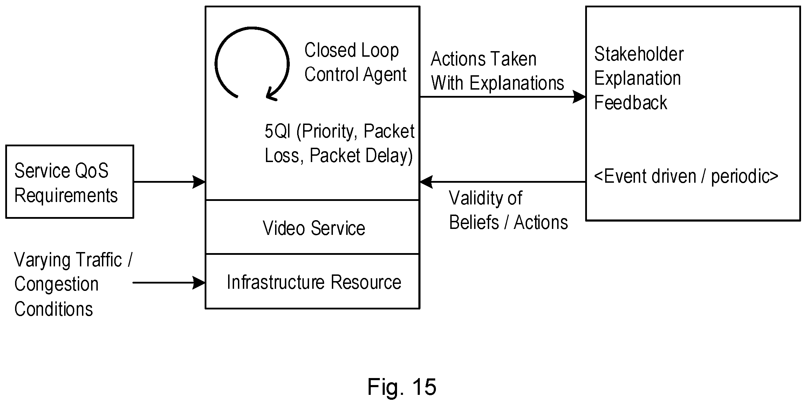

Figure 15 provides an overview of closed loop control that may be integrated with zero touch systems to ensure service quality. This example use case concerns a real-time video streaming service in which the quality of the video (rate, HD quality, delay) must be maintained within acceptable bounds over a 5G network. In order to do this, a closed loop agent is employed to modify the 5G QoS Identifier (5QI) dimensions of Priority, Packet Loss and Packet Delay. According to varying traffic and congestion conditions (unobservable after a range), the POMDP agent has to take actions based on the internal belief states maintained. During this process, the POMDP agent can receive periodic inputs from a service stakeholder on the quality of outputs and whether a particular action was appropriate. It is also important to optimize usage of underlying resources for cost and energy purposes, meaning the 5QI settings should match the service QoS requirements as closely as possible.

A detailed example of the steps that may be followed according to examples of the present disclosure is presented below.

As for the first use case, the POMDP model is updated with additional (multi-modal) explanations as observations, and with explanation feedback received. This feedback is used to generate explanation probabilities that are used for belief state updates.

Initial belief: b₀(s)=P(S=s). This remains the same as for a conventional POMDP.

### States:

The states are compound states indicating whether Video QoS requirements are met or unmet, and whether network resource constraints are met or exceeded.

| | |
|---|---|
| #0 | Video_QoS_Met_Resource_Constraints_Met |
| #1 | Video_QoS_Met_Resource_Constraints_Exceeded |
| #2 | Video_QoS_Unmet_Resource_Constraints_Met |

Set initial state probability: 0.5 0.5 0.0

### Actions:

Action a at state s is enhanced to <a, e> where a is the original action, and e is the explanation tree around s (past and future paths). As discussed above, this is not a design time construct but depends on the policy, so whenever a is selected by the policy, what is executed is <a, e>, a for the system and e is recorded for future use in generating an explanation for a.
#0 Change_5QI_Priority <Explanation: Priority Change>
#1 Change_5Q1_Packet_Delay <Explanation: Packet Delay Change>
#1 Change_5QI_Packet_Drop <Explanation: Packet Drop Change>

### Transition Probabilities:

Transition probabilities: T(s,a,s')= P (s'ls,a). Transition probabilities between states defined above (3x3 matrix describing state transitions with respect to each other following performance of a given action). This remains the same as for a conventional POMDP.

T: Change_5QI_Priority <Explanation: Priority Change> (transitions following execution of this action)

| S#0 | S#1 | S#2 | |
|---|---|---|---|
| S#0 | 1.0 | 0.0 | 0.0 |
| S#1 | 0.5 | 0.5 | 0.0 |
| S#2 | 0.1 | 0.3 | 0.6 |

### Observations:

#0 QoS deterioration
#1 QoS improvement

### Observation Probabilities:

O(s',a,o)= P (o|s',a). The probability of observing a given observation if a specific action is taken in any possible state. This remains the same as for a conventional POMDP.
O: Change_5QI_Priority: * : QoS_improvement 0.6
O: Change_5QI_Packet_Delay: * : QoS_deterioration 0.5

### Explanations:

#1 Correct_Explanations
#2 Incorrect_Explanations

### Explanation Probabilities:

Explanation feedback probabilities: E(s',a,e) = P (e|s', a). This is an additional (multi-modal) observation input provided to the explanation feedback. This represents the probability that an explanation provided at a particular state would be accepted by the stakeholder.

O: Change_5QI_Packet_Delay <Explanation Change Packet Delay>: * : Correct_Explanations 0.8

### Belief state updating:

b'(s') = P(s'lo, a, b) P(s'|e, a, b). This is the product of conventional observations as well as the explanation feedback received, and follows from the above descriptions. The agent receives an observation from the environment. Periodically, it can also receive explanation feedback from the stakeholder. The feedback is used to update the explanation probabilities that are factored in to the belief updates.

### Rewards:

R(s,a,e). The rewards are updated to include additional reward for a correct explanation.
R: action: start state: end state: observation: reward
R: Change_5QI_Packet_Delay <Explanation Change Packet Delay>: Video_QoS_Unmet_Resource_Constraints_Met: * : QoS_improvement +10
R: Change_5QI_Packet_Delay <Explanation Change Packet Delay>: Video_QoS_Unmet_Resource_Constraints_Met: * : Correct_Explanation +20
R: Change_5QI_Packet_Delay <Explanation Change Packet Delay>: Video_QoS_Unmet_Resource_Constraints_Met: * : Incorrect_Explanation -20

Correct explanations matching with the underlying belief states may result in additional rewards being added to decisions that led to correct beliefs, as well as update of explanation probabilities. Given a correct explanation and its validated belief state, explanations may be composed hierarchically based on such valid belief states (also referred to as milestones). The milestones may represent links between valid belief states and correct explanations:
Belief (t1): Video_QoS_Drop_Resource_Constraints_Met
Action A is executed in the environment and queried by an entity
Explanation(t1): Action A taken as it is best suited for Belief state
Explanation Feedback: Accepted Explanation
(t1) Milestone - Belief(t1) accepted.

In some examples, only parts of the decision tree that consist of correct beliefs, or belief states that have been identified as valid, may be used to generate the explanation. This increases the accuracy of the explanation and reduces state-space explosion over the belief space.

Incorrect beliefs, identified via rejected explanations for a given action, may result in pruning of some parts of the policy generated. This will roll back the beliefs to certain stages, for example, before re-computing the optimal policy, given additional explanation observations. The following example, taken from the present use case, illustrates how an incorrect explanation may result in a change of belief state:
At time t1, Observation QoS deterioration is obtained
   Belief state is: #2 Video_QoS_Unmet_Resource_Constraints_Met
Action from Policy: Change_5QI_Packet_Delay
Reward/observation: QoS_improvement +10

A query of this action is received from an entity, and explanation is provided based on the explanation tree output with the selected action, and explanation feedback is received rejecting the explanation provided.

### Explanation: #2 Incorrect_Explanation

Explanation reward: R: Change_5QI_Packet_Delay <Explanation Change Packet Delay>: Video_QoS_Unmet_Resource_Constraints_Met: * : Incorrect_Explanation -20
Belief Update: Re-formulate Belief State
Belief state is: #1 Video_QoS_Met_Resource_Constraints_Met

### Other Use Cases

Other use cases that could be envisaged for methods according to the present disclosure include Radio Access Network optimization such as Cell shaping (antenna power and Remote Electronic Tilt), P0 Nominal PUSCH, Downlink Power Control, and Maximum Transmission Power, all of which could be optimized with respect to network level performance. Robotics use cases may also be envisaged, including agent trajectory learning, optimization of configuration parameters, etc.

### Example message flow

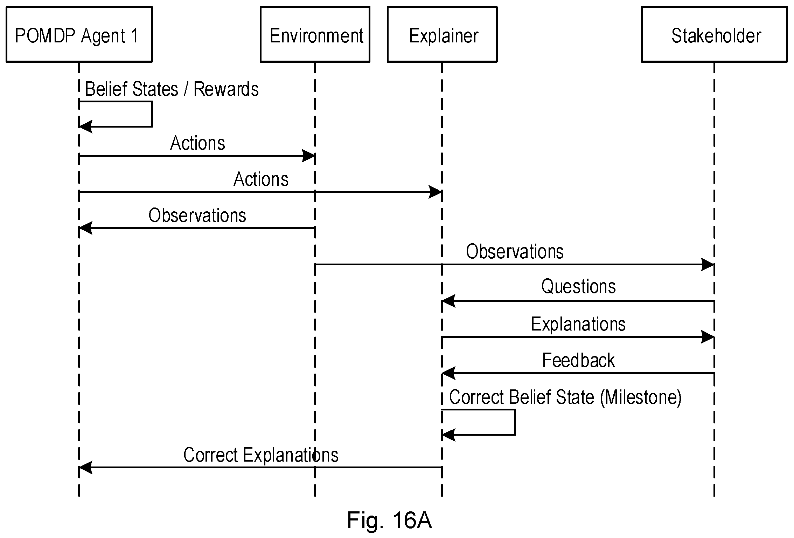

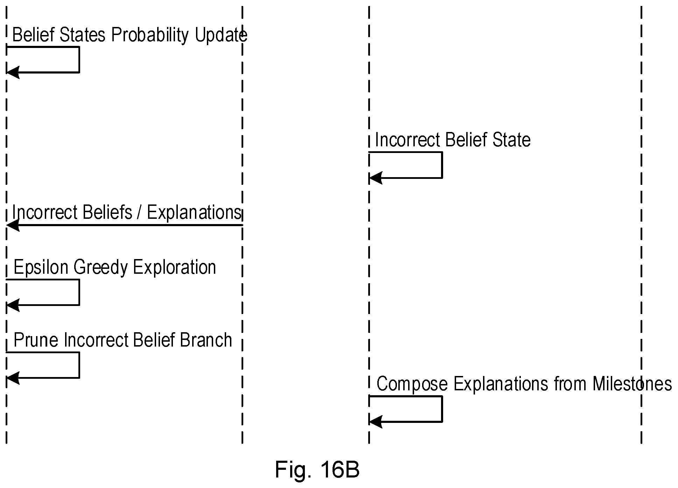

Figures 16A and a6B illustrate an example message flow between a POMDP agent, environment, explainer agent and a stakeholder. The message flow may implement examples of the methods disclosed herein. Referring to Figure 16A, the POMDP agent updates its belief states and rewards, and selects an action for the current belief state. The action is forwarded to the environment for execution. The action and its associated explanation tree are also forwarded to the explainer agent. Observations are received by the POMDP agent from the environment, and are also received by the stakeholder. On the basis of the observations, the stakeholder queries an action, and a suitable explanation is generated by the explainer agent from the explanation tree for that action, and the explanation is provided to the stakeholder. The stakeholder provides feedback on the explanation, in the form of acceptance or rejected of the explanation. If the explanation is accepted, the explainer agent updates the relevant belief state to be a milestone (identified as valid), and forwards this information to the POMDP agent. Referring to Figure 16B, the POMDP agent updates the explanation probabilities used for belief state updating, and may update reward values, appropriately. If the explanation is rejected, the explainer agent updates the relevant belief state to be incorrect, and forwards this information to the POMDP agent. The POMDP agent updates the explanation probabilities used for belief state updating, and may update reward values, appropriately. The POMDP agent may then perform epsilon greedy exploration and/or may roll back and prune the incorrect action branch.

Example methods according to the present discloser thus propose exposing a part of the POMDP and policy, in the form of an explanation tree, as part of an action of the POMDP. The explanation tree for a given action may then serve as the basis for generating an explanation for the action if the action is queried. Feedback from explanations provided for queried actions may be incorporated to validate / invalidate calculated belief states, and as additional observations into the POMDP model, in the form of explanation probabilities. Validated belief states may be used as "milestones" to improve and compose explanations for POMDP agent behavior. Examples of the present disclosure thus seek to increase the probability of identifying the correct belief state, and consequently of selecting appropriate actions, using explanation feedback, as well as improving the explanations provided to a querying entity for any given action.

Incorporating insight from an external entity via belief correction and updates can help to improve both training and runtime policy deployment. Training time can be substantially reduced as incorrect belief states are pruned, and the result is a more accurate policy with lower computations. In addition, POMDP agents and explainer agents can be trained on cloud deployments for faster processing. Structuring explanations around validated belief states can also reduce the chance of explanation rejection. Overall system performance can be improved, resulting in improved trust in the policy on the part of the stakeholder.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

## Claims

1. A computer implemented method (200) for training a policy for managing an environment in a communication network, wherein the environment is operable to perform a task, the method, performed by a training node, comprising:
using a first policy function to select an action for execution in the environment, wherein the selected action is predicted to maximise a future value of a reward function for task performance, given a current belief state of the environment (210), wherein the current belief state of the environment comprises a probability distribution over possible operational states in which the environment may exist (210a);
recording an explanation tree for the selected action (220), wherein the explanation tree comprises a representation of (220a):
the current belief state of the environment;
available actions that could be executed in the environment; and
predicted reward function values associated with the available actions;
causing the selected action to be executed in the environment (230);
obtaining an observation of the environment following execution of the selected action, the observation comprising a measure of task performance by the environment (240); and
using a second policy function to generate an updated current belief state of the environment based on the obtained observation, and on a probability that an explanation for the selected action would be accepted by an entity querying the selected action, the probability being determined based on feedback received from the entity, the explanation being generated using the explanation tree for the selected action (250).

2. The method as claimed in claim 1, wherein using a first policy function to select an action for execution in the environment comprises:
using the first policy function to map the current belief state of the environment to the action that is predicted to maximise the future value of the reward function (310a).

3. The method as claimed in claim 1 or 2, further comprising obtaining a value of the reward function as a consequence of execution of the selected action (345).

4. The method as claimed in any one of claims 1 to 3, wherein the explanation tree for the selected action comprises a representation of (320a):
a sequence of historical belief states of the environment, the sequence leading to the current belief state of the environment; and
a plurality of action branches departing from the current belief state of the environment, each action branch comprising a possible action that could be executed in the environment in the current belief state, and a predicted reward function value associated with the possible action; and
wherein an action branch of the explanation tree comprises at least one sub-branch, the sub-branch comprising a subsequent possible action that could be executed in the environment and a predicted reward function value associated with the subsequent possible action (320b).

5. The method as claimed in any one of claims 1 to 4, wherein an explanation for a selected action comprises an indication of at least one of:
a premise on the basis of which the selected action was selected by the policy;
a reasoning for the selection of the selected action.

6. The method as claimed in any one of claims 1 to 5, further comprising:
receiving from an entity a query relating to a selected action (352);
retrieving the recorded explanation tree for the queried action (354);
generating an explanation for the queried action from the retrieved explanation tree (356); and
sending the explanation to the entity (358); and
receiving from the entity feedback on the explanation for the queried action, the feedback comprising at least one of acceptance or rejection of the explanation for the queried action (360); and further
if the feedback comprises acceptance of the explanation:
identifying as a valid belief state the belief state in which the queried action was selected (380); and/or
if the feedback comprises rejection of the explanation:
identifying as an invalid belief state the belief state in which the queried action was selected (364, 374);
identifying as an incorrect action the selected action that preceded the invalid belief state (366);
from the belief state in which the incorrect action was selected, using the first policy function to select an action for execution in the environment other than the incorrect action (368); and
causing the selected action to be executed in the environment (370); and
updating the policy space of the policy such that the first policy function is prevented from selecting the incorrect action from the belief state in which the incorrect action was selected (372).

7. The method as claimed in claim 6, wherein the first policy function uses an epsilon-greedy process for selecting an action, and further comprising:
if the feedback comprises acceptance of the explanation:
incrementing the value of epsilon to reduce exploration by the policy (382); and/or
if the feedback comprises rejection of the explanation:
incrementing the value of epsilon to increase exploration by the policy (376); and
returning to a preceding valid belief state to resume selection of actions for execution in the environment (378).

8. The method as claimed in claim 6 or 7, further comprising:
updating an explanation acceptance probability distribution over available actions for execution in the environment on the basis of the feedback from the entity (384).

9. The method as claimed in any one of the preceding claims, wherein using a second policy function to generate an updated current belief state of the environment based on the obtained observation, and on a probability that an explanation for the selected action would be accepted by an entity querying the selected action, the explanation being generated using the explanation tree for the selected action, comprises:
computing the updated belief state as the product of first and second conditional probability distributions over possible operational states in which the environment may exist (350a), wherein:
the first conditional probability distribution is conditional upon the current belief state, the obtained observation, and the selected action; and
the second conditional probability distribution is conditional upon the current belief state, the selected action and the probability that an explanation for the selected action would be accepted by an entity querying the selected action, the explanation being generated using the explanation tree for the selected action.

10. The method as claimed in any one of claims 6 to 9, wherein generating an explanation for the queried action from the retrieved explanation tree comprises:
generating the explanation using belief states represented in the explanation tree that have been identified as valid (356a); and/or
generating a representation of a belief state in the retrieved explanation tree (356i); and wherein generating a representation of a belief state in the retrieved explanation tree comprises generating a representation of at least one of (356ii):
the current belief state at the time the queried action was selected; or
the most recent valid belief state at the time the queried action was selected.

11. The method as claimed in any one of claims 6 to 10, wherein the environment is subject to a plurality of operational requirements, wherein the reward function is operable to reward compliance with the operational requirements, and wherein generating an explanation for the queried action from the retrieved explanation tree comprises:
mapping at least one of a belief state in the retrieved explanation tree or the selected action to an operational requirement of the environment (356iii); and
setting the mapped operational requirement as the explanation (356v); and wherein mapping at least one of a belief state in the retrieved explanation tree or the selected action to an operational requirement of the environment comprises mapping at least one of (356iv):
the current belief state at the time the queried action was selected; or
the most recent valid belief state at the time the queries action was selected to an operational requirement of the environment.

12. A computer implemented method for training a policy for managing an environment in a communication network, wherein the environment is operable to perform a task, the method, performed by a Partially Observable Markov Decision Process, POMDP, agent, comprising:
using a first policy function to select an action for execution in the environment, wherein the selected action is predicted to maximise a future value of a reward function for task performance, given a current belief state of the environment (210), wherein the current belief state of the environment comprises a probability distribution over possible operational states in which the environment may exist (210a);
recording an explanation tree for the selected action (220), wherein the explanation tree comprises a representation of (220a):
the current belief state of the environment;
available actions that could be executed in the environment; and
predicted reward function values associated with the available actions;
causing the selected action to be executed in the environment (230);
obtaining an observation of the environment following execution of the selected action, the observation comprising a measure of task performance by the environment (240); and
using a second policy function to generate an updated current belief state of the environment based on the obtained observation, and on a probability that an explanation for the selected action would be accepted by an entity querying the selected action, the probability being determined based on feedback received from the entity, the explanation being generated by an explainer agent using the explanation tree for the selected action (250).

13. A computer implemented method for facilitating training a policy for managing an environment in a communication network, wherein the environment is operable to perform a task, the method, performed by an explainer agent, comprising:
receiving from an entity a query relating to an action selected by a Partially Observable Markov Decision Process, POMDP, agent and executed in the environment (352);
retrieving a recorded explanation tree for the queried action (354);
generating an explanation for the queried action from the retrieved explanation tree and sending the explanation to the entity (356, 358);
receiving from the entity feedback on the explanation for the queried action, the feedback comprising at least one of acceptance or rejection of the explanation for the queried action (360); and
informing the POMDP agent of the received feedback.

14. A computer program product comprising a computer readable medium, the computer readable medium having computer readable code embodied therein, the computer readable code being configured such that, on execution by a suitable computer or processor, the computer or processor is caused to perform the method of any one of claims 1 to 13.

15. A training node (400) for managing an environment in a communication network, wherein the environment is operable to perform a task, training node comprising processing circuitry (402) configured to cause the training node to:
use a first policy function to select an action for execution in the environment, wherein the selected action is predicted to maximise a future value of a reward function for task performance, given a current belief state of the environment, wherein the current belief state of the environment comprises a probability distribution over possible operational states in which the environment may exist;
record an explanation tree for the selected action, wherein the explanation tree comprises a representation of:
the current belief state of the environment;
available actions that could be executed in the environment; and
predicted reward function values associated with the available actions;
cause the selected action to be executed in the environment;
obtain an observation of the environment following execution of the selected action, the observation comprising a measure of task performance by the environment; and
use a second policy function to generate an updated current belief state of the environment based on the obtained observation, and on a probability that an explanation for the selected action would be accepted by an entity querying the selected action, the probability being determined based on feedback received from the entity, the explanation being generated using the explanation tree for the selected action.

16. A Partially Observable Markov Decision Process, POMDP, agent for training a policy for managing an environment in a communication network, wherein the environment is operable to perform a task, the POMDP agent comprising processing circuitry configured to cause the POMDP agent to:
use a first policy function to select an action for execution in the environment, wherein the selected action is predicted to maximise a future value of a reward function for task performance, given a current belief state of the environment, wherein the current belief state of the environment comprises a probability distribution over possible operational states in which the environment may exist;
record an explanation tree for the selected action, wherein the explanation tree comprises a representation of:
the current belief state of the environment;
available actions that could be executed in the environment; and
predicted reward function values associated with the available actions;
cause the selected action to be executed in the environment;
obtain an observation of the environment following execution of the selected action, the observation comprising a measure of task performance by the environment; and
use a second policy function to generate an updated current belief state of the environment based on the obtained observation, and on a probability that an explanation for the selected action would be accepted by an entity querying the selected action, the probability being determined based on feedback received from the entity, the explanation being generated by an explainer agent using the explanation tree for the selected action.

17. An explainer agent for facilitating training a policy for managing an environment in a communication network, wherein the environment is operable to perform a task, the explainer agent comprising processing circuitry configured to cause the explainer agent to:
receive from an entity a query relating to an action selected by a Partially Observable Markov Decision Process, POMDP, agent and executed in the environment;
retrieve a recorded explanation tree for the queried action;
generate an explanation for the queried action from the retrieved explanation tree and sending the explanation to the entity;
receive from the entity feedback on the explanation for the queried action, the feedback comprising at least one of acceptance or rejection of the explanation for the queried action; and
inform the POMDP agent of the received feedback.

## Patentansprüche

1. Computerimplementiertes Verfahren (200) zum Trainieren einer Richtlinie für die Verwaltung einer Umgebung in einem Kommunikationsnetzwerk, wobei die Umgebung betriebsfähig ist, um eine Aufgabe auszuführen, wobei das Verfahren, das von einem Trainingsknoten durchgeführt wird, Folgendes umfasst:
Verwenden einer ersten Richtlinienfunktion zum Auswählen einer auszuführenden Aktion in der Umgebung, wobei für die ausgewählte Aktion vorhergesagt wird, dass sie einen zukünftigen Wert einer Belohnungsfunktion für die Aufgabenerfüllung maximiert, ausgehend von einem gegenwärtigen Glaubenszustand der Umgebung (210), wobei der gegenwärtige Glaubenszustand der Umgebung eine Wahrscheinlichkeitsverteilung über mögliche Betriebszustände umfasst, in denen sich die Umgebung befinden kann (210a);
Aufzeichnen eines Erklärungsbaums für die ausgewählte Aktion (220), wobei der Erklärungsbaum eine Darstellung von (220a) umfasst:
den gegenwärtigen Glaubenszustand der Umgebung;
verfügbare Aktionen, die in der Umgebung ausgeführt werden könnten; und
vorhergesagte Belohnungsfunktionswerte, die den verfügbaren Aktionen zugeordnet sind;
Veranlassen, dass die ausgewählte Aktion in der Umgebung ausgeführt wird (230);
Erhalten einer Beobachtung der Umgebung nach Ausführung der ausgewählten Aktion, wobei die Beobachtung ein Maß für die Aufgabenerfüllung durch die Umgebung umfasst (240); und
Verwenden einer zweiten Richtlinienfunktion, um einen aktualisierten gegenwärtigen Glaubenszustands der Umgebung basierend auf der erhaltenen Beobachtung und auf der Wahrscheinlichkeit zu generieren, dass eine Erklärung für die ausgewählte Aktion von einer Entität, die die ausgewählte Aktion anfragt, akzeptiert würde, wobei die Wahrscheinlichkeit basierend auf von der Entität erhaltenem Feedback bestimmt wird, wobei die Erklärung unter Verwendung des Erklärungsbaums für die ausgewählte Aktion generiert wird (250).

2. Verfahren nach Anspruch 1, wobei das Verwenden einer ersten Richtlinienfunktion zum Auswählen einer auszuführenden Aktion in der Umgebung Folgendes umfasst:
Verwenden der ersten Richtlinienfunktion, um den gegenwärtigen Glaubenszustand der Umgebung derjenigen Aktion zuzuordnen, für die vorhergesagt wird, dass sie den zukünftigen Wert der Belohnungsfunktion maximiert (310a).

3. Verfahren nach Anspruch 1 oder 2, weiter umfassend das Erhalten eines Wertes der Belohnungsfunktion als Folge der Ausführung der ausgewählten Aktion (345).

4. Verfahren nach einem der Ansprüche 1 bis 3, wobei der Erklärungsbaum für die ausgewählte Aktion eine Darstellung von (320a) umfasst:
eine Abfolge historischer Glaubenszustände der Umgebung, wobei die Abfolge zum gegenwärtigen Glaubenszustand der Umgebung führt; und
eine Vielzahl von Aktionszweigen, die von dem gegenwärtigen Glaubenszustand der Umgebung ausgehen, wobei jeder Aktionszweig eine mögliche Aktion, die in der Umgebung in dem gegenwärtigen Glaubenszustand ausgeführt werden könnte, sowie einen der möglichen Aktion zugeordneten vorhergesagten Belohnungsfunktionswert umfasst; und
wobei ein Aktionszweig des Erklärungsbaums mindestens einen Unterzweig umfasst, wobei der Unterzweig eine nachfolgende mögliche Aktion, die in der Umgebung ausgeführt werden könnte, sowie einen der nachfolgenden möglichen Aktion zugeordneten vorhergesagten Belohnungsfunktionswert umfasst (320b).

5. Verfahren nach einem der Ansprüche 1 bis 4, wobei die Erklärung für eine ausgewählte Aktion eine Angabe von mindestens einem von Folgendem umfasst:
einer Prämisse, auf deren Grundlage die ausgewählte Aktion durch die Richtlinie ausgewählt wurde;
einer Begründung für die Auswahl der gewählten Aktion.

6. Verfahren nach einem der Ansprüche 1 bis 5, weiter umfassend:
Empfangen einer Anfrage von einer Entität bezüglich einer ausgewählten Aktion (352);
Abrufen des aufgezeichneten Erklärungsbaums für die angefragte Aktion (354);
Generieren einer Erklärung für die angefragte Aktion aus dem abgerufenen Erklärungsbaum (356); und
Senden der Erklärung an die Entität (358); und
Empfangen, von der Entität, von Feedback zu der Erklärung für die angefragte Aktion, wobei das Feedback mindestens eines von einer Akzeptanz oder einer Ablehnung der Erklärung der angefragten Aktion umfasst (360); und weiter
wenn das Feedback die Akzeptanz der Erklärung umfasst:
Identifizieren des Glaubenszustand, in dem die angefragte Aktion ausgewählt wurde (380), als einen gültigen Glaubenszustand; und/oder
wenn das Feedback die Ablehnung der Erklärung umfasst:
Identifizieren des Glaubenszustands, in dem die angefragte Aktion ausgewählt wurde (364, 374), als einen ungültigen Glaubenszustand;
Identifizieren der ausgewählten Aktion, die dem ungültigen Glaubenszustand vorausging, als eine falsche Aktion (366);
ausgehend von dem Glaubenszustand, in dem die falsche Aktion ausgewählt wurde, Verwenden der ersten Richtlinienfunktion, um eine andere Aktion als die falsche Aktion zur Ausführung in der Umgebung auszuwählen (368); und
Veranlassen, dass die ausgewählte Aktion in der Umgebung ausgeführt wird (370); und
Aktualisieren des Richtlinienraums der Richtlinie, sodass die erste Richtlinienfunktion daran gehindert wird, die falsche Aktion aus dem Glaubenszustand auszuwählen, in dem die falsche Aktion ausgewählt wurde (372).

7. Verfahren nach Anspruch 6, wobei die erste Richtlinienfunktion einen Epsilon-Greedy-Prozess zum Auswählen einer Aktion verwendet, und weiter umfassend:
wenn das Feedback die Akzeptanz der Erklärung umfasst:
Erhöhen des Wertes von Epsilon, um die Erkundung durch die Richtlinie zu reduzieren (382); und/oder
wenn das Feedback die Ablehnung der Erklärung umfasst:
Erhöhen des Wertes von Epsilon, um die Erkundung durch die Richtlinie zu steigern (376); und
Zurückkehren zu einem vorhergehenden gültigen Glaubenszustand, um die Auswahl von Aktionen zur Ausführung in der Umgebung fortzusetzen (378).

8. Verfahren nach Anspruch 6 oder 7, weiter umfassend:
Aktualisieren einer Wahrscheinlichkeitsverteilung für die Akzeptanz einer Erklärung über alle zur Ausführung verfügbaren Aktionen in der Umgebung auf der Grundlage des Feedbacks von der Entität (384).

9. Verfahren nach einem der vorstehenden Ansprüche, wobei das Verwenden einer zweiten Richtlinienfunktion, um einen aktualisierten gegenwärtigen Glaubenszustand der Umgebung basierend auf der erhaltenen Beobachtung und auf einer Wahrscheinlichkeit zu generieren, dass eine Erklärung für die ausgewählte Aktion von einer Entität, die die ausgewählte Aktion anfragt, akzeptiert würde, wobei die Erklärung unter Verwendung des Erklärungsbaums für die ausgewählte Aktion generiert wird, umfasst:
Berechnen des aktualisierten Glaubenszustands als Produkt der ersten und der zweiten bedingten Wahrscheinlichkeitsverteilung über mögliche Betriebszustände, in denen sich die Umgebung befinden kann (350a), wobei:
die erste bedingte Wahrscheinlichkeitsverteilung abhängig von dem gegenwärtigen Glaubenszustand, der erhaltenen Beobachtung und der ausgewählten Aktion abhängt; und
die zweite bedingte Wahrscheinlichkeitsverteilung von dem gegenwärtigen Glaubenszustand, der ausgewählten Aktion und der Wahrscheinlichkeit abhängt, dass eine Erklärung für die ausgewählte Aktion von einer Entität, die die ausgewählte Aktion anfragt, akzeptiert würde, wobei die Erklärung unter Verwendung des Erklärungsbaums für die ausgewählte Aktion generiert wird.

10. Verfahren nach einem der Ansprüche 6 bis 9, wobei das Generieren einer Erklärung für die angefragte Aktion aus dem abgerufenen Erklärungsbaum Folgendes umfasst:
Generieren der Erklärung unter Verwendung von Glaubenszuständen erzeugt, die in dem Erklärungsbaum dargestellt sind und als gültig identifiziert wurden (356a); und/oder
Generieren einer Darstellung eines Glaubenszustands in dem abgerufenen Erklärungsbaum (356i); und wobei das Generieren einer Darstellung eines Glaubenszustands in dem abgerufenen Erklärungsbaum das Generieren einer Darstellung von mindestens einem von Folgendem umfasst: (356ii):
dem gegenwärtigen Glaubenszustand zu dem Zeitpunkt, zu dem die angefragten Aktion ausgewählt wurde; oder
dem zuletzt gültigen Glaubenszustand zu dem Zeitpunkt, zu dem die angefragte Aktion ausgewählt wurde.

11. Verfahren nach einem der Ansprüche 6 bis 10, wobei die Umgebung einer Vielzahl von Betriebsanforderungen unterliegt, wobei die Belohnungsfunktion betriebsfähig ist, um die Einhaltung der Betriebsanforderungen zu belohnen, und wobei das Generieren einer Erklärung für die angefragte Aktion aus dem abgerufenen Erklärungsbaum Folgendes umfasst:
Zuordnen von mindestens einem von einem Glaubenszustand in dem abgerufenen Erklärungsbaum oder der ausgewählten Aktion zu einer Betriebsanforderung der Umgebung (356iii); und
Festlegen der zugeordneten Betriebsanforderung als Erklärung (356v); und wobei das Zuordnen von mindestens einem von einem Glaubenszustand in dem abgerufenen Erklärungsbaum oder der ausgewählten Aktion zu einer Betriebsanforderung der Umgebung das Zuordnen von mindestens einem von (356iv):
dem gegenwärtigen Glaubenszustand zu dem Zeitpunkt, zu dem die angefragten Aktion ausgewählt wurde; oder
dem zuletzt gültigen Glaubenszustand zu dem Zeitpunkt, zu dem die angefragte Aktion ausgewählt wurde, zu einer Betriebsanforderung der Umgebung umfasst.

12. Computerimplementiertes Verfahren zum Trainieren einer Richtlinie für die Verwaltung einer Umgebung in einem Kommunikationsnetzwerk, wobei die Umgebung betriebsfähig ist, um eine Aufgabe auszuführen, wobei das Verfahren, das von einem wird von einem Agenten eines partiell beobachtbaren Markov-Entscheidungsprozesses, POMDP, durchgeführt wird, Folgendes umfasst:
Verwenden einer ersten Richtlinienfunktion zum Auswählen einer auszuführenden Aktion in der Umgebung, wobei für die ausgewählte Aktion vorhergesagt wird, dass sie einen zukünftigen Wert einer Belohnungsfunktion für die Aufgabenerfüllung maximiert, ausgehend von einem gegenwärtigen Glaubenszustand der Umgebung (210), wobei der gegenwärtige Glaubenszustand der Umgebung eine Wahrscheinlichkeitsverteilung über mögliche Betriebszustände umfasst, in denen sich die Umgebung befinden kann (210a);
Aufzeichnen eines Erklärungsbaums für die ausgewählte Aktion (220), wobei der Erklärungsbaum eine Darstellung von (220a) umfasst:
den gegenwärtigen Glaubenszustand der Umgebung;
verfügbare Aktionen, die in der Umgebung ausgeführt werden könnten; und
vorhergesagte Belohnungsfunktionswerte, die den verfügbaren Aktionen zugeordnet sind;
Veranlassen, dass die ausgewählte Aktion in der Umgebung ausgeführt wird (230);
Erhalten einer Beobachtung der Umgebung nach Ausführung der ausgewählten Aktion, wobei die Beobachtung ein Maß für die Aufgabenerfüllung durch die Umgebung umfasst (240); und
Verwenden einer zweiten Richtlinienfunktion, um einen aktualisierten gegenwärtigen Glaubenszustands der Umgebung basierend auf der erhaltenen Beobachtung und auf der Wahrscheinlichkeit zu generieren, dass eine Erklärung für die ausgewählte Aktion von einer Entität, die die ausgewählte Aktion anfragt, akzeptiert würde, wobei die Wahrscheinlichkeit basierend auf von der Entität erhaltenem Feedback bestimmt wird, wobei die Erklärung von einem Erklärer-Agenten unter Verwendung des Erklärungsbaums für die ausgewählte Aktion generiert wird (250).

13. Computerimplementiertes Verfahren zur Erleichterung des Trainings einer Richtlinie für die Verwaltung einer Umgebung in einem Kommunikationsnetzwerk, wobei die Umgebung betriebsfähig ist, um eine Aufgabe auszuführen, wobei das Verfahren, das von einem Erklärer-Agenten ausgeführt wird, Folgendes umfasst:
Empfangen einer Anfrage von einer Entität bezüglich einer Aktion, die von einem Agenten eines partiell beobachtbaren Markov-Entscheidungsprozesses, POMDP, ausgewählt und in der Umgebung ausgeführt wird (352);
Abrufen eines aufgezeichneten Erklärungsbaums für die angefragte Aktion (354);
Generieren einer Erklärung für die angefragte Aktion aus dem abgerufenen Erklärungsbaum (356); und Senden der Erklärung an die Entität (356, 358);
Empfangen, von der Entität, von Feedback zu der Erklärung für die angefragte Aktion, wobei das Feedback mindestens eines von einer Akzeptanz oder einer Ablehnung der Erklärung der angefragten Aktion umfasst (360); und
Informieren des POMDP-Agenten über das empfangene Feedback.

14. Computerprogrammprodukt, umfassend ein computerlesbares Medium, wobei das computerlesbare Medium darin verkörperten computerlesbaren Code aufweist, der so konfiguriert ist, dass bei Ausführung durch einen geeigneten Computer oder Prozessor der Computer oder Prozessor veranlasst wird, ein Verfahren nach einem der Ansprüche 1 bis 13 durchzuführen.

15. Trainingsknoten (400) für die Verwaltung einer Umgebung in einem Kommunikationsnetzwerk, wobei die Umgebung betriebsfähig ist, um eine Aufgabe auszuführen, wobei der Trainingsknoten Verarbeitungsschaltung (402) umfasst, die konfiguriert ist, um den Trainingsknoten zu Folgendem zu veranlassen:
Verwenden einer ersten Richtlinienfunktion zum Auswählen einer auszuführenden Aktion in der Umgebung, wobei für die ausgewählte Aktion vorhergesagt wird, dass sie einen zukünftigen Wert einer Belohnungsfunktion für die Aufgabenerfüllung maximiert, ausgehend von einem gegenwärtigen Glaubenszustand der Umgebung, wobei der gegenwärtige Glaubenszustand der Umgebung eine Wahrscheinlichkeitsverteilung über mögliche Betriebszustände umfasst, in denen sich die Umgebung befinden kann;
Aufzeichnen eines Erklärungsbaums für die ausgewählte Aktion, wobei der Erklärungsbaum eine Darstellung umfasst von:
dem gegenwärtigen Glaubenszustand der Umgebung;
verfügbaren Aktionen, die in der Umgebung ausgeführt werden könnten; und
vorhergesagten Belohnungsfunktionswerten, die den verfügbaren Aktionen zugeordnet sind;
Veranlassen, dass die ausgewählte Aktion in der Umgebung ausgeführt wird;
Erhalten einer Beobachtung der Umgebung nach Ausführung der ausgewählten Aktion, wobei die Beobachtung ein Maß für die Aufgabenerfüllung durch die Umgebung umfasst; und
Verwenden einer zweiten Richtlinienfunktion, um einen aktualisierten gegenwärtigen Glaubenszustands der Umgebung basierend auf der erhaltenen Beobachtung und auf der Wahrscheinlichkeit zu generieren, dass eine Erklärung für die ausgewählte Aktion von einer Entität, die die ausgewählte Aktion anfragt, akzeptiert würde, wobei die Wahrscheinlichkeit basierend auf von der Entität erhaltenem Feedback bestimmt wird, wobei die Erklärung unter Verwendung des Erklärungsbaums für die ausgewählte Aktion generiert wird.

16. Agent eines partiell beobachtbaren Markov-Entscheidungsprozesses, POMDP, zum Trainieren einer Richtlinie für die Verwaltung einer Umgebung in einem Kommunikationsnetzwerk, wobei die Umgebung betriebsfähig ist, um eine Aufgabe auszuführen, wobei der POMDP-Agent Verarbeitungsschaltung, umfasst, die konfiguriert ist, um den POMDP-Agenten zu Folgendem zu veranlassen:
Verwenden einer ersten Richtlinienfunktion zum Auswählen einer auszuführenden Aktion in der Umgebung, wobei für die ausgewählte Aktion vorhergesagt wird, dass sie einen zukünftigen Wert einer Belohnungsfunktion für die Aufgabenerfüllung maximiert, ausgehend von einem gegenwärtigen Glaubenszustand der Umgebung, wobei der gegenwärtige Glaubenszustand der Umgebung eine Wahrscheinlichkeitsverteilung über mögliche Betriebszustände umfasst, in denen sich die Umgebung befinden kann;
Aufzeichnen eines Erklärungsbaums für die ausgewählte Aktion, wobei der Erklärungsbaum eine Darstellung umfasst von:
dem gegenwärtigen Glaubenszustand der Umgebung;
verfügbaren Aktionen, die in der Umgebung ausgeführt werden könnten; und
vorhergesagten Belohnungsfunktionswerten, die den verfügbaren Aktionen zugeordnet sind;
Veranlassen, dass die ausgewählte Aktion in der Umgebung ausgeführt wird;
Erhalten einer Beobachtung der Umgebung nach Ausführung der ausgewählten Aktion, wobei die Beobachtung ein Maß für die Aufgabenerfüllung durch die Umgebung umfasst; und
Verwenden einer zweiten Richtlinienfunktion, um einen aktualisierten gegenwärtigen Glaubenszustands der Umgebung basierend auf der erhaltenen Beobachtung und auf der Wahrscheinlichkeit zu generieren, dass eine Erklärung für die ausgewählte Aktion von einer Entität, die die ausgewählte Aktion anfragt, akzeptiert würde, wobei die Wahrscheinlichkeit basierend auf von der Entität erhaltenem Feedback bestimmt wird, wobei die Erklärung von einem Erklärer-Agenten unter Verwendung des Erklärungsbaums für die ausgewählte Aktion generiert wird.

17. Erklärer-Agent zur Erleichterung des Trainings einer Richtlinie für die Verwaltung einer Umgebung in einem Kommunikationsnetzwerk, wobei die Umgebung betriebsfähig ist, um eine Aufgabe auszuführen, wobei der Erklärer-Agent Verarbeitungsschaltung umfasst, die konfiguriert ist, um den Erklärer-Agent zu Folgendem zu veranlassen:
Empfangen einer Anfrage von einer Entität bezüglich einer Aktion, die von einem Agenten eines partiell beobachtbaren Markov-Entscheidungsprozesses, POMDP, ausgewählt und in der Umgebung ausgeführt wird;
Abrufen eines aufgezeichneten Erklärungsbaums für die angefragte Aktion;
Generieren einer Erklärung für die angefragte Aktion aus dem abgerufenen Erklärungsbaum und Senden der Erklärung an die Entität;
Empfangen, von der Entität, von Feedback zu der Erklärung für die angefragte Aktion, wobei das Feedback mindestens eines von einer Akzeptanz oder einer Ablehnung der Erklärung der angefragten Aktion umfasst; und
Informieren des POMDP-Agenten über das empfangene Feedback.

## Revendications

1. Procédé mis en œuvre par ordinateur (200) destiné à l'entraînement d'une politique de gestion d'un environnement dans un réseau de communication, dans lequel l'environnement peut fonctionner pour réaliser une tâche, le procédé, mis en œuvre par un nœud d'entraînement, comprenant :
l'utilisation d'une première fonction de politique pour sélectionner une action destinée à être exécutée dans l'environnement, dans lequel l'action sélectionnée est prédite pour maximiser une valeur future d'une fonction de récompense pour la réalisation de la tâche, étant donné un état de croyance actuel de l'environnement (210), dans lequel l'état de croyance actuel de l'environnement comprend une distribution de probabilité sur des états opérationnels possibles dans lesquels l'environnement peut exister (210a) ;
l'enregistrement d'un arbre d'explication pour l'action sélectionnée (220), dans lequel l'arbre d'explication comprend une représentation de (220a) :
l'état de croyance actuel de l'environnement ;
des actions disponibles qui pourraient être exécutées dans l'environnement ; et
des valeurs de fonction de récompense prédites associées aux actions disponibles ;
le fait d'entraîner l'exécution de l'action sélectionnée dans l'environnement (230) ;
l'obtention d'une observation de l'environnement à la suite de l'exécution de l'action sélectionnée, l'observation comprenant une mesure de la réalisation de la tâche par l'environnement (240) ; et
l'utilisation d'une seconde fonction de politique pour générer un état de croyance actuel mis à jour de l'environnement sur la base de l'observation obtenue et d'une probabilité qu'une explication pour l'action sélectionnée serait acceptée par une entité requérant l'action sélectionnée, la probabilité étant déterminée sur la base d'un retour reçu de l'entité, l'explication étant générée en utilisant l'arbre d'explication pour l'action sélectionnée (250).

2. Procédé selon la revendication 1, dans lequel l'utilisation d'une première fonction de politique pour sélectionner une action destinée à être exécutée dans l'environnement comprend :
l'utilisation de la première fonction de politique pour mapper l'état de croyance actuel de l'environnement sur l'action qui est prédite pour maximiser la valeur future de la fonction de récompense (310a).

3. Procédé selon la revendication 1 ou 2, comprenant en outre l'obtention d'une valeur de la fonction de récompense en conséquence de l'exécution de l'action sélectionnée (345).

4. Procédé selon l'une quelconque des revendications 1 à 3, dans lequel l'arbre d'explication pour l'action sélectionnée comprend une représentation de (320a) :
une séquence d'états de croyance historiques de l'environnement, la séquence menant à l'état de croyance actuel de l'environnement ; et
une pluralité de branches d'action partant de l'état de croyance actuel de l'environnement, chaque branche d'action comprenant une action possible qui pourrait être exécutée dans l'environnement dans l'état de croyance actuel, et une valeur de fonction de récompense prédite associée à l'action possible ; et
dans lequel une branche d'action de l'arbre d'explication comprend au moins une sous-branche, la sous-branche comprenant une action possible ultérieure qui pourrait être exécutée dans l'environnement et une valeur de fonction de récompense prédite associée à l'action possible ultérieure (320b).

5. Procédé selon l'une quelconque des revendications 1 à 4, dans lequel une explication pour une action sélectionnée comprend une indication d'au moins un parmi :
une prémisse sur la base de laquelle l'action sélectionnée a été sélectionnée par la police ;
un raisonnement pour la sélection de l'action sélectionnée.

6. Procédé selon l'une quelconque des revendications 1 à 5, comprenant en outre :
la réception en provenance d'une entité d'une requête relative à une action sélectionnée (352) ;
la récupération de l'arbre d'explication enregistré pour l'action requise (354) ;
la génération d'une explication pour l'action requise à partir de l'arbre d'explication récupéré (356) ; et
l'envoi de l'explication à l'entité (358) ; et
la réception en provenance de l'entité d'un retour sur l'explication de l'action requise, le retour comprenant au moins un parmi une acceptation ou un rejet de l'explication de l'action requise (360) ; et en outre
si le retour comprend l'acceptation de l'explication :
l'identification en tant qu'état de croyance valide l'état de croyance dans lequel l'action requise a été sélectionnée (380) ; et/ou
si le retour comprend le rejet de l'explication :
l'identification en tant qu'état de croyance invalide l'état de croyance dans lequel l'action requise a été sélectionnée (364, 374) ;
l'identification en tant qu'action incorrecte de l'action sélectionnée qui a précédé l'état de croyance invalide (366) ;
à partir de l'état de croyance dans lequel l'action incorrecte a été sélectionnée, l'utilisation de la première fonction de politique pour sélectionner une action destinée à être exécutée dans l'environnement autre que l'action incorrecte (368) ; et
le fait d'entraîner l'exécution de l'action sélectionnée dans l'environnement (370) ; et
la mise à jour de l'espace de politique de la politique de sorte que la première fonction de politique est empêchée de sélectionner l'action incorrecte à partir de l'état de croyance dans lequel l'action incorrecte a été sélectionnée (372).

7. Procédé selon la revendication 6, dans lequel la première fonction de politique utilise un processus epsilon-greedy pour sélectionner une action, et comprenant en outre :
si le retour comprend l'acceptation de l'explication :
l'incrémentation de la valeur d'epsilon pour réduire l'exploration par la politique (382) ; et/ou
si le retour comprend le rejet de l'explication :
l'incrémentation de la valeur d'epsilon pour augmenter l'exploration par la politique (376) ; et
le retour à un état de croyance valide précédent pour reprendre la sélection d'actions destinées à être exécutées dans l'environnement (378).

8. Procédé selon la revendication 6 ou 7, comprenant en outre :
la mise à jour d'une distribution de probabilité d'acceptation d'explication sur des actions disponibles destinées à être exécutées dans l'environnement sur la base du retour en provenance de l'entité (384).

9. Procédé selon l'une quelconque des revendications précédentes, dans lequel l'utilisation d'une seconde fonction de politique pour générer un état de croyance actuel mis à jour de l'environnement sur la base de l'observation obtenue et d'une probabilité qu'une explication pour l'action sélectionnée serait acceptée par une entité requérant l'action sélectionnée, l'explication étant générée en utilisant l'arbre d'explication pour l'action sélectionnée, comprend :
le calcul de l'état de croyance mis à jour en tant que produit de première et seconde distributions de probabilité conditionnelle sur des états opérationnels possibles dans lesquels l'environnement pourrait exister (350a), dans lequel :
la première distribution de probabilité conditionnelle est conditionnée à l'état de croyance actuel, l'observation obtenue et l'action sélectionnée ; et
la seconde distribution de probabilité conditionnelle est conditionnée à l'état de croyance actuel, à l'action sélectionnée et à la probabilité qu'une explication pour l'action sélectionnée serait acceptée par une entité requérant l'action sélectionnée, l'explication étant générée en utilisant l'arbre d'explication pour l'action sélectionnée.

10. Procédé selon l'une quelconque des revendications 6 à 9, dans lequel la génération d'une explication pour l'action requise à partir de l'arbre d'explication récupéré comprend :
la génération de l'explication en utilisant des états de croyance représentés dans l'arbre d'explication qui ont été identifiés comme valides (356a) ; et/ou
la génération d'une représentation d'un état de croyance dans l'arbre d'explication récupéré (356i) ; et dans lequel la génération d'une représentation d'un état de croyance dans l'arbre d'explication récupéré comprend la génération d'une représentation d'au moins un parmi (356ii) :
l'état de croyance actuel au moment où l'action requise a été sélectionnée ; ou
l'état de croyance valide le plus récent au moment où l'action requise a été sélectionnée.

11. Procédé selon l'une quelconque des revendications 6 à 10, dans lequel l'environnement est soumis à une pluralité d'exigences opérationnelles, dans lequel la fonction de récompense peut fonctionner pour récompenser le respect des exigences opérationnelles, et dans lequel la génération d'une explication pour l'action requise à partir de l'arbre d'explication récupéré comprend :
le mapping d'au moins un état de croyance dans l'arbre d'explication récupéré ou l'action sélectionnée sur une exigence opérationnelle de l'environnement (356iii) ; et
la définition de l'exigence opérationnelle mappée comme explication (356v) ; et dans lequel le mapping d'au moins un état de croyance dans l'arbre d'explication récupéré ou de l'action sélectionnée avec une exigence opérationnelle de l'environnement comprend le mapping d'au moins un parmi (356iv) :
l'état de croyance actuel au moment où l'action requise a été sélectionnée ; ou
l'état de croyance valide le plus récent au moment où l'action requise a été sélectionnée pour une exigence opérationnelle de l'environnement.

12. Procédé mis en œuvre par ordinateur destiné à l'entraînement d'une politique de gestion d'un environnement dans un réseau de communication, dans lequel l'environnement peut fonctionner pour réaliser une tâche, le procédé, mis en œuvre par un agent de processus de décision markovien partiellement observable, POMDP, comprenant :
l'utilisation d'une première fonction de politique pour sélectionner une action destinée à être exécutée dans l'environnement, dans lequel l'action sélectionnée est prédite pour maximiser une valeur future d'une fonction de récompense pour la réalisation de la tâche, étant donné un état de croyance actuel de l'environnement (210), dans lequel l'état de croyance actuel de l'environnement comprend une distribution de probabilité sur des états opérationnels possibles dans lesquels l'environnement peut exister (210a) ;
l'enregistrement d'un arbre d'explication pour l'action sélectionnée (220), dans lequel l'arbre d'explication comprend une représentation de (220a) :
l'état de croyance actuel de l'environnement ;
des actions disponibles qui pourraient être exécutées dans l'environnement ; et
des valeurs de fonction de récompense prédites associées aux actions disponibles ;
le fait d'entraîner l'exécution de l'action sélectionnée dans l'environnement (230) ;
l'obtention d'une observation de l'environnement à la suite de l'exécution de l'action sélectionnée, l'observation comprenant une mesure de la réalisation de la tâche par l'environnement (240) ; et
l'utilisation d'une seconde fonction de politique pour générer un état de croyance actuel mis à jour de l'environnement sur la base de l'observation obtenue et sur une probabilité qu'une explication pour l'action sélectionnée serait acceptée par une entité requérant l'action sélectionnée, la probabilité étant déterminée sur la base d'un retour reçu de l'entité, l'explication étant générée par un agent explicateur en utilisant l'arbre d'explication pour l'action sélectionnée (250).

13. Procédé mis en œuvre par ordinateur pour faciliter l'entraînement d'une politique de gestion d'un environnement dans un réseau de communication, dans lequel l'environnement peut fonctionner pour réaliser une tâche, le procédé, mis en œuvre par un agent explicateur, comprenant :
la réception en provenance d'une entité d'une requête relative à une action sélectionnée par un agent de processus de décision markovien partiellement observable, POMDP, et exécutée dans l'environnement (352) ;
la récupération d'un arbre d'explication enregistré pour l'action requise (354) ;
la génération d'une explication pour l'action requise à partir de l'arbre d'explication récupéré et l'envoi de l'explication à l'entité (356, 358) ;
la réception en provenance de l'entité d'un retour sur l'explication de l'action requise, le retour comprenant au moins un parmi une acceptation ou un rejet de l'explication de l'action requise (360) ; et
l'information de l'agent POMDP à propos du retour reçu.

14. Produit programme d'ordinateur comprenant un support lisible par ordinateur, le support lisible par ordinateur présentant un code lisible par ordinateur incorporé sur celui-ci, le code lisible par ordinateur étant configuré de manière telle que, lors de l'exécution par un ordinateur ou processeur approprié, l'ordinateur ou le processeur est amené à réaliser le procédé selon l'une quelconque des revendications 1 à 13.

15. Nœud d'entraînement (400) pour gérer un environnement dans un réseau de communication, dans lequel l'environnement peut fonctionner pour réaliser une tâche, le nœud d'entraînement comprenant des circuits de traitement (402) configurés pour amener le nœud d'entraînement à :
utiliser une première fonction de politique pour sélectionner une action destinée à être exécutée dans l'environnement, dans lequel l'action sélectionnée est prédite pour maximiser une valeur future d'une fonction de récompense pour la réalisation de la tâche, étant donné un état de croyance actuel de l'environnement, dans lequel l'état de croyance actuel de l'environnement comprend une distribution de probabilité sur des états opérationnels possibles dans lesquels l'environnement peut exister ;
enregistrer un arbre d'explication pour l'action sélectionnée, dans lequel l'arbre d'explication comprend une représentation de :
l'état de croyance actuel de l'environnement ;
des actions disponibles qui pourraient être exécutées dans l'environnement ; et des valeurs de fonction de récompense prédites associées aux actions disponibles ;
entraîner l'exécution de l'action sélectionnée dans l'environnement ;
obtenir une observation de l'environnement à la suite de l'exécution de l'action sélectionnée, l'observation comprenant une mesure de la réalisation de la tâche par l'environnement ; et
utiliser une seconde fonction de politique pour générer un état de croyance actuel mis à jour de l'environnement sur la base de l'observation obtenue et sur une probabilité qu'une explication pour l'action sélectionnée serait acceptée par une entité requérant l'action sélectionnée, la probabilité étant déterminée sur la base d'un retour reçu de l'entité, l'explication étant générée en utilisant l'arbre d'explication pour l'action sélectionnée.

16. Agent de processus de décision markovien partiellement observable, POMDP, destiné à l'entraînement d'une politique de gestion d'un environnement dans un réseau de communication, dans lequel l'environnement peut fonctionner pour réaliser une tâche, l'agent POMDP comprenant des circuits de traitement configurés pour amener l'agent POMDP à :
utiliser une première fonction de politique pour sélectionner une action destinée à être exécutée dans l'environnement, dans lequel l'action sélectionnée est prédite pour maximiser une valeur future d'une fonction de récompense pour la réalisation de la tâche, étant donné un état de croyance actuel de l'environnement, dans lequel l'état de croyance actuel de l'environnement comprend une distribution de probabilité sur des états opérationnels possibles dans lesquels l'environnement peut exister ;
enregistrer un arbre d'explication pour l'action sélectionnée, dans lequel l'arbre d'explication comprend une représentation de :
l'état de croyance actuel de l'environnement ;
des actions disponibles qui pourraient être exécutées dans l'environnement ; et
des valeurs de fonction de récompense prédites associées aux actions disponibles ;
entraîner l'exécution de l'action sélectionnée dans l'environnement ;
obtenir une observation de l'environnement à la suite de l'exécution de l'action sélectionnée, l'observation comprenant une mesure de la réalisation de la tâche par l'environnement ; et
utiliser une seconde fonction de politique pour générer un état de croyance actuel mis à jour de l'environnement sur la base de l'observation obtenue et sur une probabilité qu'une explication pour l'action sélectionnée serait acceptée par une entité requérant l'action sélectionnée, la probabilité étant déterminée sur la base d'un retour reçu de l'entité, l'explication étant générée par un agent explicateur en utilisant l'arbre d'explication pour l'action sélectionnée.

17. Agent explicateur destiné à faciliter l'entraînement d'une politique de gestion d'un environnement dans un réseau de communication, dans lequel l'environnement peut fonctionner pour réaliser une tâche, l'agent explicateur comprenant des circuits de traitement configurés pour amener l'agent explicateur à :
recevoir en provenance d'une entité d'une requête relative à une action sélectionnée par un agent de processus de décision markovien partiellement observable, POMDP, et exécutée dans l'environnement ;
récupérer un arbre d'explication enregistré pour l'action requise ;
générer une explication pour l'action requise à partir de l'arbre d'explication récupéré et l'envoi de l'explication à l'entité ;
recevoir en provenance de l'entité d'un retour sur l'explication de l'action requise, le retour comprenant au moins un parmi une acceptation ou un rejet de l'explication de l'action requise ; et
informer l'agent POMDP à propos du retour reçu.
